# EUROPÄISCHE PATENTSCHRIFT

(11) **EP 0 934 542 B1**
(45) Veröffentlichungstag und Bekanntmachung des Hinweises auf die Patenterteilung: **02.01.2003**
(21) Anmeldenummer: 97947703.1
(22) Anmeldetag: 22.10.1997
(51) Int. Cl.: G02B 6/255

(54) **VERFAHREN SOWIE VORRICHTUNG ZUM VERSCHWEISSEN VON LICHTWELLENLEITERN**
METHOD AND DEVICE FOR FUSION SPLICING OPTICAL FIBRES
PROCEDE ET DISPOSITIF POUR L'EPISSURAGE DE FIBRES OPTIQUES

(30) Priorität: 22.10.1996 DE 19643661
(43) Veröffentlichungstag der Anmeldung: 11.08.1999
(73) Patentinhaber: SIEMENS AKTIENGESELLSCHAFT, 80333 München (DE)
(72) Erfinder: KOSSAT, Rainer, D-83229 Aschau (DE); RUEGENBERG, Gervin, D-81377 München (DE); ZIMMER, Frank, D-86937 Scheuring (DE); DONABAUER, Roman, D-93086 Wörth (DE)
(74) Vertreter: Viering, Hans-Martin, Dipl.-Ing.
(86) Internationale Anmeldenummer: DE9702461
(87) Internationale Veröffentlichungsnummer: WO98018032

(56) Entgegenhaltungen:
- EP-A- 0 232 520
- EP-A- 0 320 978
- DE-A- 2 839 428
- DE-A- 3 806 866
- US-A- 4 765 816
- PATENT ABSTRACTS OF JAPAN vol. 014, no. 353 (P-1086), 31.Juli 1990 & JP 02 129607 A (SUMITOMO ELECTRIC IND LTD;OTHERS: 01), 17.Mai 1990,
- PATENT ABSTRACTS OF JAPAN vol. 010, no. 106 (P-449), 22.April 1986 & JP 60 237408 A (FURUKAWA DENKI KOGYO KK;OTHERS: 03), 26.November 1985,
- PATENT ABSTRACTS OF JAPAN vol. 018, no. 175 (P-1716), 24.März 1994 & JP 05 341150 A (SUMITOMO ELECTRIC IND LTD), 24.Dezember 1993,

## Beschreibung

Die Erfindung betrifft ein Verfahren zum Verschweißen mindestens zweier, einander zugeordneter optischer Fasern. Die Erfindung betrifft ferner eine Vorrichtung zur Durchführung des Verfahrens sowie ein Lichtwellenleiter-Spleißgerät.

In der Praxis kann die korrekte Einstellung sogenannter Schweiß- bzw. Spleißparameter (wie z.B. Schweißstromstärke, Schweißdauer, Schweißenergie, Elektrodenabstand, Elektrodenposition, usw.) für das thermische Verschweißen, insbesondere Fusionsverschweißen, von Lichtwellenleitern erschwert sein.

Zur Einstellung der Hitzemenge für das Verschweißen je zweier optischer Fasern wird beim bekannten Verfahren der EP 0 320 978 beispielsweise ein blankes optisches Faserende Hitze ausgesetzt, dabei angeschmolzen und durch die Oberflächenspannung des zähflüssig gemachten Glasmaterials abgerundet. Dadurch zieht sich das Faserende von seiner ursprünglichen Endposition vor dem Schweißvorgang zurück. Diejenige Distanz, um die das Faserende unter der Hitzeeinwirkung in Faserlängsrichtung zurückschmelzt und dadurch in seiner Länge verkürzt wird, korrespondiert zur wirksam werdenden Hitzemenge. Sie wird gemessen, um diese Hitzemenge quantitativ zu erfassen und dann einzustellen. Diese bekannten Vorgehensweise ist allerdings zu stark fehlerbehaftet. Ein Grund dafür ist insbesondere, daß die Schweißverhältnisse beim Abrundungsvorgang zu stark von denen beim normalen Verschweißen zweier Lichtleitfasern abweichen.

Aus der DE 38 06 866 A1 ist ein Verfahren zum Verbinden zweier optischer Fasern unterschiedlichen Brechzahlprofils bekannt. Dazu werden zum Beispiel dessen untereinander verschweißten Enden unter Zugspannung gesetzt und dabei unter Wärmezufuhr verjüngt. Dieses sogenannte "Tapern" wird nur so durchgeführt, dass für beide Fasern das Verhältnis vom Kernradius der verjüngten Faser zum Kernradius der unverjüngten Faser größer als 0,5 ist. Dabei kann während des Ziehvorgangs zur Herstellung des "Taperspleißes" die minimale Spleißdämpfung des "Taperspleißes" zum Beispiel mittels eines Biegekopplers beobachtet und somit eine optimale Taperlänge erhalten werden. Bei diesem bekannten Taper-Verfahren wird somit lediglich bei der Herstellung des jeweiligen "Taperspleißes" selbst eine Einstellung des Kernradiusverhältnisses von verjüngter und unverjüngter Faser sowie der Taperlänge, das heißt von geometrischen Abmessungen des "Taperspleißes" selbst, vorgenommen.

Auch aus der US 4,765,816 ist ein Verfahren zum Herstellen eines solchen "Taperspleißes" bekannt, bei dem der "Taperspleiß" lediglich nach fest vorgegebenen Einstellungen, wie zum Beispiel einem vorgegebenen Koppelfaktor zwischen den beiden untereinander getaperten optischen Fasern, hergestellt wird. Der erreichte Koppelgrad zwischen den beiden optischen Fasern beim Tapern wird dabei ebenfalls über die Spleißdämpfung von eingekoppeltem Meßlicht kontrolliert.

Auch beim "Taperverfahren" der DE 28 39 428 OS wird lediglich bei der Herstellung des jeweiligen "Taperspleißes" selbst ein vorgegebener Koppelgrad dadurch eingestellt, dass die Zugbeanspruchung beim Erreichen eines bestimmten, fest vorgegebenen Faserdurchmessers fortgenommen und gleichzeitig die Erwärmung abgeschaltet wird. Hierzu können zum Beispiel die geometrischen Abmessungen der getaperten optischen Fasern während des Ziehvorgangs gemessen bzw. kontrolliert werden. Ist der fest vorgegebene Durchmesser erreicht, so können die Zugbeanspruchung und Erwärmung abgeschaltet werden.

Bei diesen bekannten "Taperverfahren" werden auf diese Weise sich zeitlich ändernde, wechselnde Umwelt- und/ oder Umgebungseinflüsse, wie zum Beispiel unterschiedliche Luftfeuchtigkeit, Lufttemperatur, Luftdruck, Elektrodenzustand, etc. nur unzureichend oder gar nicht berücksichtigt, da bei der Herstellung des jeweils gewünschten Taperspleißes lediglich dessen Parameter selbst wie zum Beispiel Koppelgrad, Dämpfung, geometrische Abmessungen, usw. eingestellt werden.

Durch die Erfindung werden ein Verfahren zum Verschweißen mindestens zweier, einander zugeordneter optischer Fasern sowie eine Vorrichtung zur Durchführung dieses Verfahrens und eine Lichtwellenleiter-Spleißgerät geschaffen, womit die optischen Fasern angepaßt an jeweilige äußere Schweißbedingungen miteinander verschweißbar sind.

Das erfindungsgemäße Verfahren hat die im Anspruch 1 beschriebenen Merkmale. Die erfindungsgemäße Vorrichtung hat die im Anspruch 18 beschriebenen Merkmale, und das erfindungsgemäße Lichtwellenleiter-Spleißgerät hat die im Anspruch 19 beschriebenen Merkmale. Vorteilhafte Weiterbildungen des erfindungsgemäßen Verfahrens sind in den zugehörigen abhängigen Ansprüchen beschrieben.

Die Erfindung und ihre Weiterbildungen werden nachfolgend anhand von Zeichnungen näher erläutert.

Es zeigen:
- Figur 1: schematisch in teilweise perspektivischer Darstellung den Grundaufbau einer Vorrichtung zur Durchführung des erfindungsgemäßen Verfahrens,
- Figuren 2 mit 4: jeweils in schematischer Darstellung verschiedene Schweißstrom/Zeit-Diagramme zur Durchführung von verschiedenen Ausführungsvarianten des erfindungsgemäßen Verfahrens,
- Figur 5: in schematischer sowie vergrößerter Darstellung die Einschnürung eines Probe-Lichtleitfaserabschnitts bei der Durchführung des erfindungsgemäßen Verfahrens,
- Figur 6: schematisch in teilweise perspektivischer Darstellung die Vorrichtung nach Figur 1 zur Durchführung einer weiteren Abwandlung des erfindungsgemäßen Verfahrens,
- Figuren 7 mit 10: verschiedene Diagramme, die zur praktischen Realisierung des erfindungsgemäßen Verfahrens eine zweckmäßige, weitere Möglichkeit aufzeigen,
- Figur 11: in schematischer Darstellung eine Hitzeimpuls- Abfolge zur Durchführung der Verfahrensvariante nach den Figuren 7 mit 10, und
- Figur 12: in schematischer Darstellung ein Diagramm zur Korrektur der Schweißstromstärke.

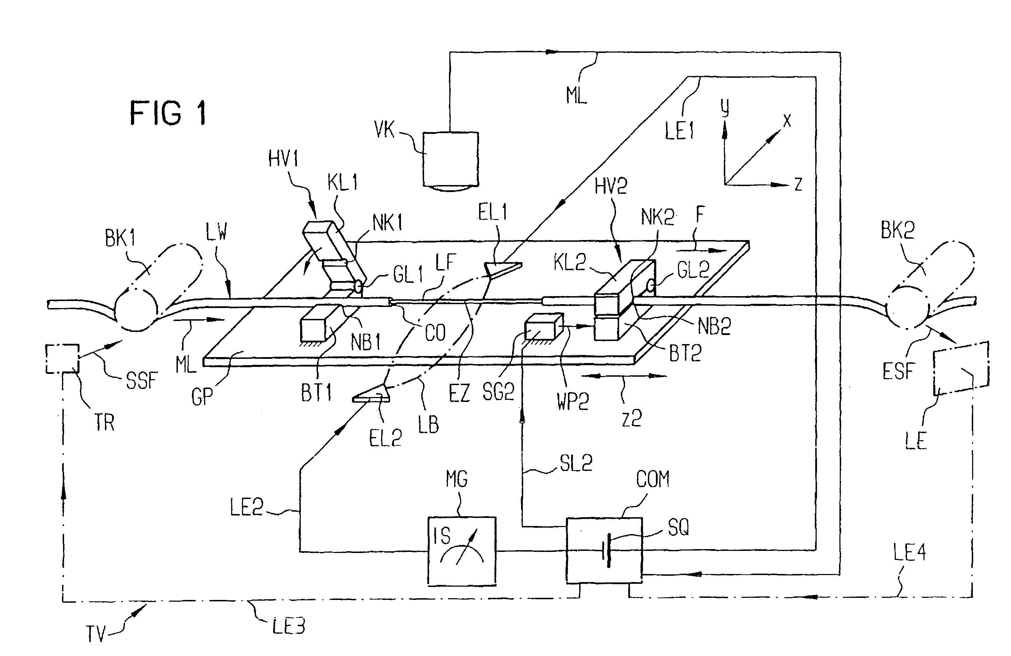

Elemente mit gleicher Funktion und Wirkungsweise sind in den Figuren 1 mit 12 jeweils mit den gleichen Bezugszeichen versehen.

Figur 1 zeigt schematisch in teilweise perspektivischer Darstellung den Grundaufbau einer Schweißvorrichtung TV, mit deren Hilfe ein optimaler Satz von Schweiß- bzw. Spleißparametern für das thermische Verschweißen von mindestens zwei Lichtwellenleitern bei Vorliegen konkreter, d.h. spezifischer Schweiß- bzw. Spleißbedingungen (wie z.B.

Luftfeuchtigkeit, Luftdruck, Lufttemperatur, Fasertyp, Elektrodenzustand, usw.) ermittelt und eingestellt werden kann. Die Schweißvorrichtung TV ist vorzugsweise Bestandteil eines Lichtwellenleiter-Spleißgerätes, insbesondere Lichtwellenleiter- Fusionsschweißgerätes. In diese Schweißvorrichtung TV von Figur 1 ist ein Lichtwellenleiter LW durchgehend eingelegt. Seine Kunststoff-Beschichtung CO (= primäres und/oder sekundäres Coating) ist entlang einer vorgebbaren Teillänge entfernt, so daß dort ein durchgehender Probe-Lichtleitfaserabschnitt LF blank freiliegt. Beidseitig dieses Probe-Lichtleitfaserabschnitts LF wird der gecoatete, d.h. ein oder mehrschichtig kunststoffbeschichtete, Lichtwellenleiter LW jeweils in mindestens einer Haltevorrichtung wie z.B. HV1 bzw. HV2 bekannter Bauart (wie zum Beispiel Manipulatoren) gehalten und lagefixiert.

Zur besseren Veranschaulichung der Fixierwirkung der jeweiligen Haltevorrichtung ist in der linken Bildhälfte von Figur 1 beispielhaft die Haltevorrichtung HV1 in geöffnetem Zustand gezeichnet. Sie weist ein Basisteil BT1 auf, auf dessen Oberseite eine Längsnut NB1 eingelassen ist, in die der gecoatete Lichtwellenleiter LW eingelegt ist. Am Basisteil BT1 ist über ein Gelenk GL1, Scharnier oder dergleichen ein Deckel bzw. eine Klappe KL1 angebracht, die in Richtung auf das Basisteil BT1 zuschwenkbar ist. Auf der Innenseite des Deckels KL1 ist eine Längsnut NK1 korrespondierend zur Längsnut NB1 im Basisteil BT1 vorgesehen. Nach Schließen der Haltevorrichtung HV1 wird somit der Lichtwellenleiter LW zwischen dem Basisteil BT1 und dem Deckel KL1 eingeklemmt und dort festgehalten. Analog dazu fixiert die Haltevorrichtung HV2 den gecoateten Lichtwellenleiter LW an einer Längsstelle, die der Ortsposition der ersten Haltevorrichtung HV1 bezüglich des freigelegten Probe- Lichtleitfaserabschnitts LF gegenüberliegt. Figur 1 zeigt die Haltevorrichtung HV2 im geschlossenen Zustand, bei dem der gecoatete Lichtwellenleiter LW zwischen dem Basisteil BT2 und dem Deckel KL2 der Haltevorrichtung HV2 eingeklemmt ist und dadurch festgehalten wird. Der Deckel KL2 ist dabei mit Hilfe eines Gelenks GL2 am Basisteil BT2 schwenkbar angebracht. Zur Lagepositionierung des Lichtwellenleiters LW ist auf der Innenseite, hier der Oberseite des Basisteils BT2 eine Längsnut NB2 sowie korrespondierend dazu auf der Innenseite, hier der Unterseite, des Deckels KL2 eine Längsnut NK2 eingelassen.

Die beiden Haltevorrichtungen HV1, HV2 sind auf einer gemeinsamen Grundplatte GP angeordnet. Mindestens eine der Haltevorrichtungen HV1 bzw. HV2 ist in mindestens eine Raumrichtung verschiebbar ausgebildet. Bei der Testvorrichtung TV von Figur 1 ist beispielhaft die zweite Haltevorrichtung HV2 entlang der axialen Längserstreckung des Probe- Lichtleitfaserabschnitts LF verschiebbar, während die erste Haltevorrichtung HV1 auf der Grundplatte GP feststehend angebracht ist. Die Verschieberichtung der zweiten Haltevorrichtung HV2 entspricht hier im Beispiel der Raumrichtung z eines kartesischen Koordinatensystems x,y,z. Die Verschiebbarkeit der Haltevorrichtung HV2 in z-Richtung ist in der Figur 1 mittels eines Doppelpfeils z2 angedeutet. Die Raumrichtung x läuft in Querrichtung zur Längserstreckung des Lichtwellenleiters LW, insbesondere senkrecht, das heißt orthogonal zur Raumrichtung z. Die plane Grundplatte GP liegt insbesondere parallel zu der von der x- sowie z-Richtung aufgespannten Ebene. Die Raumrichtung y steht senkrecht zu dieser x, z-Ebene, das heißt sie verläuft von oben nach unten.

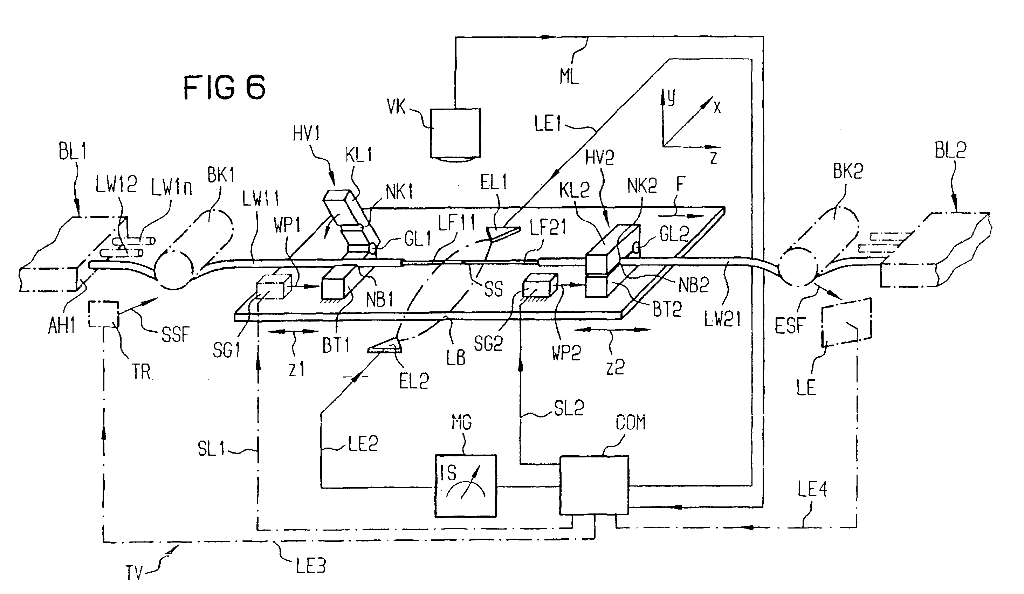

Um nun den Probe-Lichtleitfaserabschnitt LF mit einer vorgebbaren, das heißt definierten Zugspannung F in Faserlängsrichtung während einer vorgebbaren Prüfzeitdauer beaufschlagen zu können, wird die Haltevorrichtung HV2 in z-Richtung von der feststehenden Haltevorrichtung HV1 um eine vorgebbare Längsstrecke - hier in der Figur 1 nach rechtswegbewegt. Dazu ist der Haltevorrichtung HV2 ein Stellglied SG2 zugeordnet, das seine Steuersignale von einer Auswerte/Steuervorrichtung COM über eine Steuerleitung SL2 erhält. Die Verschiebewirkung des Stellgliedes SG2 auf die Haltevorrichtung HV2 ist in der Figur 1 mit Hilfe eines Wirkpfeils WP2 schematisch angedeutet. Dadurch, daß der Lichtwellenleiter LW auf einer Seite seines freigelegten Lichtleitfaserabschnitts LF mit einer Haltevorrichtung wie z.B HV1 ortstest festgehalten wird, auf der anderen, bezüglich des Lichtleitfaserabschnitts LF gegenüberliegenden Seite hingegen mittels einer Zugeinrichtung (, hier insbesondere durch die zweite Haltevorrichtung HV2 gebildet,) von dieser ortsfesten Haltevorrichtung wegbewegt wird, wird der Probe-Lichtleitfaserabschnitt LF entlang seiner Längsachse, d.h. axialen Längserstreckung, zwischen den beiden Haltevorrichtungen HV1, HV2 vorzugsweise geradlinig gespannt. Gegebenenfalls sind auch andere Relativbewegungen zwischen den beiden Haltevorrichtungen HV1, HV2 von Figur 1 zur Erzeugung einer Zugkraft entlang des Lichtleitfaserabschnitts LF möglich. So kann es insbesondere zweckmäßig sein, zusätzlich oder unabhängig zur zweiten Haltevorrichtung HV2 von Figur 1 die erste Haltevorrichtung HV1 ebenfalls in axialer Längsrichtung des Probe-Lichcleitfaserabschnitts LF verschiebbar auszubilden und ihr ein eigenes Stellglied zuzuordnen. Ein solches Stellglied für die Haltevorrichtung HV1 ist in Figur 6 für die Schweißvorrichtung TV zusätzlich strichpunktiert mit eingezeichnet sowie mit SG1 bezeichnet. Es ist dort über eine strichpunktiert eingezeichnete Steuerleitung SL1 an die Auswerte-/Steuereinrichtung COM angeschlossen und von dieser aus aktivier- sowie deaktivierbar. Seine Verschiebewirkung auf die Haltevorrichtung HV1 ist mit Hilfe eines Wirkpfeils WP1 schematisch angedeutet. Die Verschiebbarkeit der Haltevorrichtung HV1 in z-Richtung ist mit Hilfe eines Doppelpfeils z1 veranschaulicht. Um den Probe-Lichtleitfaserabschnitt zwischen zwei solchen Haltevorrichtungen HV1, HV2 unter eine vorgebbare Zugspannung in Faserlängsrichtung setzen zu können, werden die beiden, jetzt verschiebbar ausgebildeten Haltevorrichtungen HV1, HV2 vorzugsweise entlang der axialen Längserstreckung des Lichtwellenleiters LW auseinanderbewegt.

Zusammenfassend betrachtet weist also die erfindungsgemäße Schweißvorrichtung mindestens eine Zugeinrichtung auf, mit der der jeweilige Probe-Lichtleitfaserabschnitt während einer vorgebbaren Prüfzeitdauer einer definierten Zugspannung in Faserlängsrichtung unterwerfbar ist. Vorzugsweise zieht die Zugeinrichtung derart am Probe-Lichtleitfaserabschnitt, daß dieser entlang einer Geradenlinie gespannt wird. Insbesondere wird die entlang der axialen Längsachse des Probe-Lichtleitfaserabschnitts wirkende Zugspannungskraft für eine vorgebbare Prüfzeit im wesentlichen konstant gehalten. Der Lichtleitfaserabschnitt LF wird vorzugsweise mit einer Zugspannungskraft von höchstens 4 N, insbesondere zwischen 0,5 und 3 N beaufschlagt.

Während dieser Zugbelastung des Probe-Lichtleitfaserabschnitts LF wird dieser im Bereich mindestens einer Längsstelle EZ (siehe Figur 1) mit Hilfe mindestens einer Heizeinrichtung, insbesondere thermischen Wärmequelle, erwärmt, insbesondere angeschmolzen, d.h. auf Schmelztemperatur seines Glasmaterials gebracht. Dazu sind in der Figur 1 dem Zwischenraum zwischen den beiden Haltevorrichtungen HV1, HV2 z.B. zwei Schweißelektroden EL1, EL2 derart zugeordnet, daß sich zwischen ihnen ein sogenannter Lichtbogen durch Glimmentladungen queraxial, insbesondere senkrecht, zur Längserstreckung des Probe-Lichtleitfaserabschnitts LF ausbilden kann. Der Verlauf des Bereichs, in dem sich jeweils ein Lichtbogen zwischen den beiden Elektroden EL1, EL2 ausbreiten kann, (= Erwärmungs- bzw. Schweißbereich) ist in der Figur 1 der zeichnerischen Einfachheit halber lediglich in Form einer langgestreckten, strichpunktierten Ellipse angedeutet und mit LB bezeichnet. Während die Elektrode EL1 der einen Längsseite des Probe-Lichtleitfaserabschnitts LF zugeordnet ist, befindet sich die Elektrode EL2 auf der der Schweißelektrode EL1 gegenüberliegenden Längsseite des Probe-Lichtleitfaserabschnitts LF. Insbesondere liegt die Schweißelektrode EL1 der Schweißelektrode EL2 um etwa 180° versetzt gegenüber. Die jeweilige Schweißelektrode EL1 bzw. EL2 ist über eine zugehörige Stromleitung LE1 bzw. LE2 an eine Spannungsquelle SQ angeschlossen, die vorzugsweise Bestandteil der Auswerte-/Steuereinrichtung COM ist. Die Spannungsquelle SQ ist in der Figur 1 der zeichnerischen Einfachheit halber lediglich symbolisch angedeutet. Z.B. in die Stromleitung LE2 ist ein Strommeßgerät MG eingefügt, das die Entladestromstärke IS der Glimmentladungen zwischen den beiden Elektroden EL1, EL2 mißt und anzeigt. Das Meßgerät ME kann dabei gegebenenfalls ebenfalls mit in die Auswerte/Steuereinrichtung COM integriert sein, so daß dort die gemessenen Entladestromstärken der Glimmentladungen sowie deren zugehörige Entladezeitdauern zur Auswertung bereitgestellt sind.

Der unter der definierten Zugspannung F stehende Probe-Lichtleitfaserabschnitt LF wird in der Schweißvorrichtung TV von Figur 1 an mindestens einer Längsstelle vorzugsweise soweit erwärmt, insbesondere angeschmolzen, bis dort eine bestimmte meßbare Einschnürung (="Taperung") seines Außenumfangs, d.h. Querschnittsreduzierung, erreicht wird. Aus der Information, ob überhaupt eine Einschnürung auftritt und/oder aus dem Grad einer etwaig bewirkten Einschnürung, insbesondere deren radialer Einschnürtiefe, lassen sich dann in vorteilhafter Weise indirekt Rückschlüsse zur Glasviskosität der verwendeten Lichtleitfaser bei deren Erhitzung gewinnen. Um eine sich etwaig ausbildende Einschnürung am Außenumfang des Probe-Lichtleitfaserabschnitts LF im Bereich der jeweiligen Erwärmungsstelle wie z.B. EZ erfassen zu können, ist dieser Erwärmungsstelle ein optisches Abbildungs- bzw. Bildverarbeitungssystem VK, insbesondere eine Videokamera, als Erfassungsmittel zugeordnet. Vorzugsweise eignet sich ein Bildverarbeitungssystem, wie es in der US-PS 5,011,259 angegeben und detailliert beschrieben ist. In der Figur 1 ist das optische Bildverarbeitungssystem VK oberhalb der Grundplatte GP der zeichnerischen Übersichtlichkeit halber lediglich vereinfacht dargestellt. Das optische Bildverarbeitungssystem VK ist über eine Meßleitung ML mit der Auswerte-/Steuereinrichtung COM verbunden, um die von ihm aufgenommenen Bildinformationen auswerten zu können.

Zusammenfassend betrachtet wird also von dem jeweiligen Probe- Lichtleitfaserabschnitt vorzugsweise ein optisches Abbild in mindestens einer Projektionsebene erzeugt sowie erfaßt, und die Bildinformation dieses Faserabbilds zur Auswertung bereitgestellt. Aus dieser Bildinformation des Probe- Lichtleitfaserabschnitts kann dann in vorteilhafter Weise mindestens ein Meßkriterium für die Einschnürwirkung ermittelt werden.

Selbstverständlich kann es auch zweckmäßig sein, eine etwaige Einschnürung des Außenumfangs des Probe-Lichtleitfaserabschnitts LF, d.h. dessen Querschnittsreduzierung infolge der axialen Zugspannungsbelastung in Kombination mit der Erhitzung, mit Hilfe anderer Meßmittel zu ermitteln bzw. zu erfassen. In der Figur 1 sind die Komponenten (wie zum Beispiel BK1, BK2, TR, LE, LE3, LE4) eines solchen zusätzlichen oder alternativen Meßsystems für die Ermittlung einer etwaigen Einschnürung strichpunktiert mit eingezeichnet. Es weist auf der einen Seite des Prüf- Lichtleitfaserabschnitts LF einen optischen Sender TR, insbesondere eine Laserdiode, sowie auf der anderen, gegenüberliegenden Seite des Probe-Lichtleitfaserabschnitts LF einen optischen Empfänger LE, insbesondere ein lichtempfindliches Element, auf. Anteile des Sende-Strahlungsfeldes SSF des optischen Senders TR werden sendeseitig (,hier in der Figur 1 in der linken Bildhälfte,) in den Lichtwellenleiter LW unter Zuhilfenahme eines Biegekopplers BK1 in Richtung auf den freigelegten Probe-Lichtleitfaserabschnitt LF eingekoppelt. (Der Biegekoppler BK1 ist dabei bei Blickrichtung von links nach rechts vor der Haltevorrichtung HV1 angeordnet.) Die Aussteuerung des optischen Senders TR kann von der Auswerte-/Steuereinrichtung COM über eine Steuerleitung LE3 erfolgen. Auf diese Weise durchläuft in der Figur 1 Meßlicht ML den freigelegten Probe-Lichtleitfaserabschnitt LF von links nach rechts. Anteile dieses Meßlichts ML können nach Durchlaufen des Probe-Lichtleitfaserabschnitts LF empfangsseitig mit Hilfe eines zweiten Biegekopplers BK2 ausgekoppelt werden, der in der rechten Bildhälfte von Figur 1 nach der zweiten Haltevorrichtung HV2 an den gecoateten Lichtwellenleiter LW angekoppelt ist. Das Empfangsstrahlungsfeld ESF dieser empfangsseitig ausgekoppelten Meßlichtanteile wird in der Figur 1 mit Hilfe mindestens eines lichtempfindlichen Elements LE, insbesondere einer Fotodiode, erfaßt und über eine Meßleitung LE4 an die Auswerte-/Steuereinrichtung COM zur Auswertung weitergeleitet. Auf diese Weise ist es ermöglicht, Veränderungen des über den Probe-Lichtleitfaserabschnitt LF geschickten Meßlichts ML zu bestimmen und diese Veränderungen als Maß für eine etwaige Einschnürung am Außenumfang der Lichtleitfaser heranzuziehen. Insbesondere kann es dabei zweckmäßig sein, die Dämpfung des im Probe- Lichtleitfaserabschnitt LF geführten Meßlichts ML mit Hilfe der in der US-PS 5,078,489 beschriebenen Meßmethode ("LID-Verfahren = "Light Injection and Detection") zu ermitteln. Bildet sich eine Einschnürung am Außenumfang der unter Zug stehenden Lichtleitfaser durch die Aufheizung mit dem Lichtbogen LB aus, so wird dadurch nämlich eine Dämpfungserhöhung bei der Lichtübertragung verursacht. Je größer die Einschnürung wird, desto größer wird auch die Dämpfung, so daß eine eindeutige Zuordnung zwischen der zeitlichen Aufnahme des Dämpfungsverlaufs und dem Grad der Einschnürung möglich ist. Je größer die Dämpfungszunahme wird, desto größer ist also die erzeugte Querschnittsreduzierung des Probe- Lichtleitfaserabschnitts LF, insbesondere Einschnürtiefe dessen aufgeschmolzenen Glasmaterials in radialer Richtung.

Figur 5 zeigt in schematischer sowie vergrößerter Darstellung ein optisches Abbild des Probe- Lichtleitfaserabschnitts bzw. der Testfaser LF im Bereich zwischen den beiden Elektroden EL1, EL2 beispielhaft in der x, z- Betrachtungsebene. Dort ist zusätzlich der Verlauf des Faserkerns (core) des Probe-Lichtieitfaserabschnitts mit eingezeichnet und mit dem Bezugszeichen KE versehen. Der Faserkern (core) KE verläuft im wesentlichen zentrisch im Inneren des Mantelglases (cladding) MA der Testfaser LF. Die Zentralachse ZA der Testfaser LF ist strichpunktiert ebenfalls eingezeichnet. Räumlich betrachtet weist die optische Testfaser LF somit einen im wesentlichen kreiszylinderförmigen Faserkern KE in ihrem Zentrum auf, auf dem das Mantelglas MA als etwa kreiszylinderförmige Beschichtung aufsitzt.

Durch die Glimmentladungen zwischen den beiden Elektroden EL1, EL2 wird die Testfaser LF im Lichtbogenbereich LB (strichpunktiert eingezeichnet) lokal erwärmt, insbesondere geschmolzen und dadurch erweicht. Da die Lichtleitfaser LF dabei entlang ihrer axialen Längserstreckung fortdauernd unter einer vorgebbaren, definierten Zugspannung F steht, wird das erweichte, zähflüssig gemachte Glasmaterial der Testfaser LF in axialer Längsrichtung auseinandergezogen. Es kommt dabei beidseitig von der strichpunktiert eingezeichneten Mittenlinie ML des Lichtbogenbereichs LB weg zu einem Materialfluß MFU (in der Figur 5 durch Pfeile gekennzeichnet) des aufgeschmolzenen, nachgiebig gemachten Glasmaterials der Testfaser LF in Faserlängsrichtung. Dadurch tritt im Erwärmungsbereich des Lichtbogens LB eine Audünnung sowohl des Faserkerns KE als auch des Fasermantels MA ein. Es nimmt also der Außendurchmesser der Lichtleitfaser LF im Lichtbogenbereich LB zwischen den beiden Elektroden EL1, EL2 ab, das heißt es bildet sich dort im Längsverlauf der Testfaser LF eine Einschnürung bzw. Verjüngung deren Außenumfangs aus. In der x, z- Betrachtungsebene von Figur 5 weisen die beiden Längsseiten der im Lichtbogen- bzw. Schweißbereich LB eingeschnürten Testfaser LF jeweils eine im wesentlichen parabelförmige Außenkontur auf, die achssymmetrisch zur Mittenlinie ML ausgebildet ist. Die Einschnürung ist in der Figur 5 mit ES bezeichnet. In radialer Richtung (bezogen auf die Zentralachse der Testfaser LF) entlang der Mittenlinie ML betrachtet kommt es aufgrund der Einschnürung insgesamt zu einer Reduzierung des Außendurchmessers um Δd gegenüber dem ursprünglichen Außendurchmesser AD der Testfaser LF, wie ihn diese außerhalb des Lichtbogenbereichs LB aufweist. Mit Δd ist somit die insgesamt bewirkte Außendurchmesserverringerung im Einschnürbereich bezeichnet. Δd/2 in Figur 5 kennzeichnet folglich die radiale Einschnür- bzw. Absenktiefe der Außenkontur der Testfaser LF im Einschnürbereich ES gegenüber der Außenkontur der Testfaser LF außerhalb des Erwärmungsbereichs LB. Der Grad der Einschnürung - vorzugsweise ausgedrückt durch die Außendurchmesserreduzierung Δd - kann dann in vorteilhafter Weise als Maß für die bei der Erwärmung, insbesondere Aufschmelzung des Probe- Lichtleitfaserabschnitts erzeugten Faserviskosität herangezogen werden. Insbesondere entspricht die Glasviskosität, die für eine optimale Verschweißung zweier Lichtleitfasern erforderlich ist, einer bestimmten radialen Einschnürtiefe. Dieser vorgegebenen Soll-Einschnürung sind unter den jeweilig vorliegenden Schweißbedingungen (wie zum Beispiel Luftfeuchtigkeit, Luftdruck, Lufttemperatur Fasertyp, Elektrodenzustand, usw.) insbesondere eine bestimmte Schweißstomstärke (vgl. IS in Figur 1), Schweißzeitdauer, Elektrodenabstand sowie sonstige Schweißparameter zugeordnet, so daß sich ein spezifischer Schweiß- bzw. Spleißparametersatz für eine gewünschte, optimale Faserviskosität zusammenstellen läßt.

Zusätzlich oder unabhängig von der direkten Ermittlung der Außendurchmesser- Reduzierung kann es besonders zweckmäßig sein, als Meßkriterium für die Einschnürwirkung des jeweiligen Erwärmungs- bzw. Schweißvorgang die Intensitätswertveränderung innerhalb mindestens eines Meßfensters heranzuziehen, von dem an der Erwärmungsstelle EZ die Außenkontur mindestens einer der beiden Längsseiten des Probe-Lichtleitfaserabschnitts erfaßt wird. In der Figur 5 ist ein erstes, strichpunktiert angedeutetes Meßfenster MF1 der Außenkontur OL1 der oberen, abgebildeten Längsseite des Probe-Lichtleitfaserabschnitts LF zugeordnet. Es ist rechteckförmig ausgebildet und erstreckt sich mit seinen Längsseiten vorzugsweise etwa parallel zur Faserzentralachse ZA der gespannten Testfaser LF. Es ist vorzugsweise Bestandteil des Bildsensors des Bildverarbeitungssystems VK von Figur 1 bzw. 6. Das Meßfenster MP1 legt also vorzugsweise einen Bildausschnitt in der jeweiligen Betrachtungsebene fest, in dem die Intensitätswerte der einzelnen Pixelelemente zur Auwertung herangezogen werden. Aus diesem rechteckförmigen Bildausschnitt werden die Intensitätswerte der einzelnen Pixelelemente mit Hilfe der Auswerte-/ Steuereinrichtung COM ausgelesen. vorzugsweise wird mit Hilfe der Auswerte-/Steuereinrichtung COM die Summe all derjenigen Bildpunkte, das heißt "Pixel", innerhalb des Meßfensters MF1 ermittelt, die gegenüber der Faserabbildung LF hell erscheinen. Es werden vorzugsweise all diejenigen Bildpunkte innerhalb des Meßfensters MF1 gezählt, deren Intensitätswerte jeweils oberhalb einer festgelegten Helligkeitsschwelle liegen. Diese Helligkeitsschwelle wird zweckmäßigerweise derart gewählt, daß eine eindeutige Unterscheidung zwischen Bildpunkten der dunkel abgebildeten Testfaser und des sonstigen, hell erscheinenden Bildhintergrunds der x, z-Betrachtungsebene ermöglicht ist. Je größer die Anzahl der hellen Bildpunkte im Meßfenster MF1 wird, desto größer ist die jeweilige Faserquerschnittsverjüngung. Die Helligkeitsveränderung, die sich etwaig nach dem jeweilig vorgenommenen Erhitzungs- bzw. Schweißvorgang einstellt, bildet somit ein Maß für die bewirkte Faserverjüngung.

Um in der x, z-Betrachtungsebene von Figur 5 auch einen etwaigen Glasmaterialschwund im Bereich der unteren Längsseite des Probe-Lichtleitfaserabschnitts LF bei dessen Erwärmungsstelle erfassen zu können, ist der Außenkontur UL1 der unteren Faserlängsseite in entsprechender Weise ein zweites, rechteckförmiges Meßfenster MF2 zugeordnet. Dieses zweite Meßfenster MF2 ist in der Figur 5 ebenfalls strichpunktiert angedeutet. Es ist bezüglich der strichpunktiert gezeichneten Zentralachse ZA des Probe-Lichtleitfaserabschnitts LF im wesentlichen achssymmetrisch zum ersten Meßfenster MF1 ausgerichtet. Auch das zweite Meßfenster MF2 begrenzt vorzugsweise einen Bildausschnitt des Bildsensors des Bildverarbeitungssystems VK von Figur 1.

Selbstverständlich kann es auch zweckmäßig sein, als Meßfenster MF1, MF2 jeweils eigenständige, lichtempfindliche Elemente vorzusehen. Weiterhin kann es gegebenenfalls zweckmäßig sein, innerhalb des jeweiligen Meßfensters MF1 bzw. MF2 die Gesamtsumme der Intensitätswerte der einzelnen Bildpunkte zu ermitteln und die Veränderung dieser Gesamtintensitätssumme als Maß für die Faserverjüngung heranzuziehen. In der Figur 5 ist die Auswertemöglichkeit des jeweiligen Meßfensters MF1 bzw. MF2 durch die Auswerte-Steuereinrichtung COM dadurch angedeutet, daß das erste Meßfenster MF1 über eine strichpunktierte Datenleitung LE5 sowie das zweite Meßfenster MF2 durch eine strichpunktierte Datenleitung LE6 mit der Steuer-/Auswerteeinrichtung COM verbunden ist.

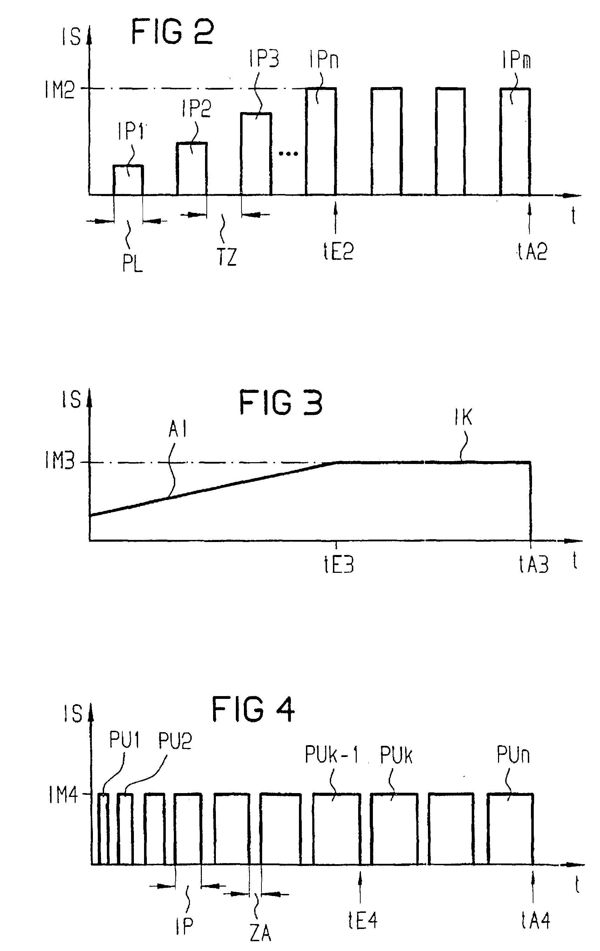

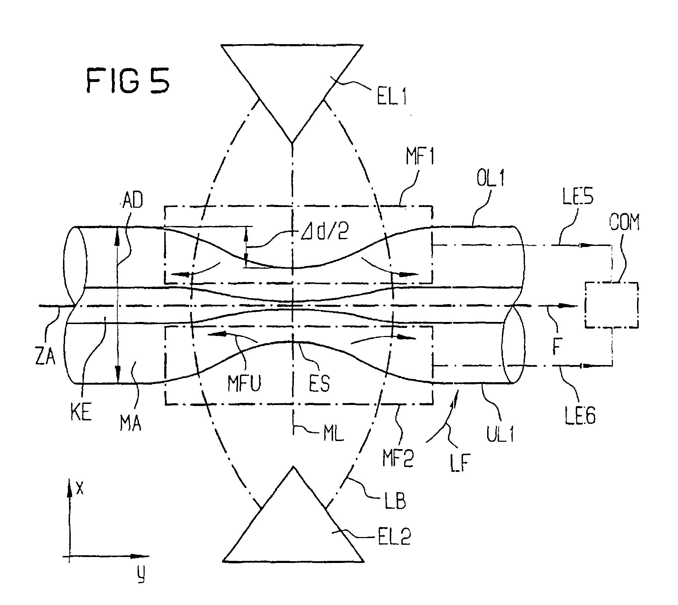

Folgende Vorgehensweisen können insbesondere zur automatischen Ermittlung optimaler Schweißparameter zweckmäßig sein. Dabei wertet insbesondere die Auswerte/Steuereinrichtung COM des Spleißgeräts von Figur 1 vorzugsweise den zeitlichen Verlauf der Entladestromstärke IS aus und setzt diesen in vorteilhafter Weise mit der jeweilig bewirkten, radialen Einschnürtiefe Δd/2 in Beziehung.
1. Soll ein optimaler Schweißparametersatz z.B. für zwei typgleiche, miteinander zu verschweißende Lichtwellenleiter ermittelt werden, so wird zweckmäßigerweise einer der beiden Lichtwellenleiter wie zum Beispiel LW in Figur 1 in das Spleißgerät eingelegt. Vorab wurde dabei der einzulegende Lichtwellenleiter entlang einem Teilabschnitt entcoatet, das heißt seine Kunststoffbeschichtung abgesetzt, so daß dort seine blanke Lichtleitfaser wie zum Beispiel LF freiliegt. Mit Hilfe einer Zugprüfeinrichtung wird der Lichtwellenleiter wie z.B. LW von Figur 1 entlang seines freigelegten Lichtleitfaserabschnitts wie z.B. LF unter eine definierte Zugspannung F versetzt. Mit Hilfe einer Heizeinrichtung wie z.B. den beiden Elektroden EL1, EL2 von Figur 1 wird der blanke Lichtleitfaserabschnitt an einer oder mehreren Längsstellen bei fest eingestelltem Schweißparametersatz erhitzt, insbesondere angeschmolzen. Dabei wird die Veränderung des Faseraußendurchmessers an der jeweiligen Erwärmungsstelle vermessen. Dies kann insbesondere auf optischem Wege mit dem optischen Bildverarbeitungssystem VK von Figur 1 erfolgen. Die jeweilig, bei vorgegebenen Schweißbedingungen sowie vorliegenden, noch nicht optimierten Schweißparametern erreichte Einschnürtiefe kann dann zur Betimmung optimaler Schweißparameter für die eigentliche Herstellung einer Lichtwellenleiterschweißverbindung herangezogen werden.
   Zweckmäßig kann es sein, die unter Zugspannung stehende Lichtleitfaser an der jeweiligen Vermessungsstelle lediglich soweit vorzuerwärmen, bis überhaupt erst einmal eine Einschnürung sichtbar, insbesondere meßbar wird. Die Figuren 2 mit 4 zeigen schematisch anhand von Entladestromstärke/Zeit- Diagrammen IS/t drei verschiedene Möglichkeiten auf, wie durch entsprechende Wahl des zeitlichen Verlaufs der Entladestromstärke IS die Lichtleitfaser so weit vorerwärmt werden kann, bis sich überhaupt erst einmal eine erste Einschnürung einstellt.
   a) Gemäß Figur 2 kann eine Vorerwärmung der gespannten Lichtleitfaser LF im Bereich der jeweiligen Vermessungsstelle mit Hilfe einer Abfolge von Hitze-, insbesondere Glimmentladungsimpulsen erreicht werden, deren korrrespondierend zugeordnete Schweißstromimpulse IP1 mit Ipn in Figur 2 eingezeichnet sind. Die Schweißstromstärke IS dieser Schweißstromimpulse IP1 mit IPn steigt über der Zeit t betrachtet sukzessive an, d.h von einem Schweißstromimpuls zum zeitlich nächsten Schweißstromimpuls wird die Schweißstromstärke IS stufenweise erhöht. In der Figur 2 sind die Schweißstromimpulse IP1 mit IPn jeweils schematisch in Form eines schmalen Rechtecks angedeutet. Zweckmäßigerweise wird die Stromstärke des Starthitzeimpulses, d.h. hier ersten Lichtbogenimpulses IP1 so niedrig gewählt, daß die durch den Lichtbogenpuls bewirkte Fasertemperatur noch nicht zur Auslösung des Einschnüreffekts ausreicht und in jedem Fall nicht zum Faserbruch führt. Die Schweißstromimpulse IP1 mit IPn weisen vorzugsweise jeweils eine etwa gleich große, das heißt konstante Impulslänge PL auf. Der zeitliche Abstand, das heißt die Totzeit TZ zwischen je zwei zeitlich aufeinanderfolgenden, benachbarten Schweißstromimpulsen wie zum Beispiel IP2, IP3 ist ebenfalls im wesentlichen konstant. Dadurch, daß eine zeitliche Abfolge von diskreten, das heißt einzelnen Glimmentladungsimpulsen auf den Probe-Lichtleitfaserabschnitt an der jeweiligen Vermessungsstelle abgegeben, und die Schweißstromstärke IS dieser Glimmentladungsimpulse sukzessive gesteigert wird, wird die Lichtleitfaser im Bereich der Vermessungsstelle in präzise dosierter Weise immer stärker erwärmt, bis schließlich überhaupt erst einmal eine Veränderung, insbesondere Verringerung des Außenumfangs der Lichtleitfaser eintritt, das heißt erstmalig der Beginn einer Einschnürung im Anfangsstadium festgestellt werden kann. In der Figur 2 wird nach Abgabe des Impulses IPn mit der zugehörigen Entladestromstärke IM2 erstmalig überhaupt eine Einschnürung sichtbar, das heißt von da ab beginnt sich die Lichtleitfaser überhaupt erst einzuschnüren. Mit anderen Worten heißt das, daß erst ab diesem Zeitpunkt tE2 das Glasmaterial der Lichtleitfaser soweit erweicht ist, daß es unter der fortdauernden Einwirkung der vorgegebenen Zugspannungskraft F überhaupt erst zu einem Materialfließen kommt. Aus den Stromstärken der Entladestromimpulse IP1 mit IPn, deren Impulslänge, der Totzeit TZ zwischen je zwei aufeinanderfolgenden Stromstärkeimpulsen, dem Zeitpunkt tE2, der den Beginn des Einschnüreftekts markiert, sowie der vorgegebenen Zugspannungskraft F läßt sich dann insbesondere ein optimierter Schweißparametersatz zum späteren Verschweißen, insbesondere zum sogenannten Vorschweißen, je zweier eigentlich miteinander zu verbindender Lichtwellenleiter gewinnen. Insbesondere läßt sich daraus die Vorschweißdauer sowie die Vorschweißstromstärke ableiten. Unter Vorschweißen versteht man in der Lichtwellenleiter-Schweißtechnik insbesondere eine Präparationsmaßnahme, bei der die Faserenden zweier miteinander zu verbindender Lichtwellenleiter bezüglich ihrer Faserkerne einen definierten Längsabstand voneinander aufweisen und zur stirnseitigen "Schmelzverklebung", d.h. Kontaktierung, vorerwärmt, insbesondere lediglich oberflächlich angeschmolzen werden. Erst danach werden die stirnseitig aneinandergehefteten Faserenden im sogenannten Hauptschweißvorgang derart durcherwärmt und miteinander verschmolzen, daß die eigentlich zugfeste Schweißverbindung entsteht.
   b) Weiterhin kann es zweckmäßig sein, die gespannte Lichtleitfaser im Bereich der jeweiligen Vermessungsstelle mit einem kontinuierlich steigenden, insbesondere linear ansteigenden Schweißstrom IS vorzuerwärmen. Dies veranschaulicht das Stromstärke/Zeitdiagramm von Figur 3. Dort steigt die Stromstärke IS bis zum Zeitpunkt tE3 solange kontinuierlich an, bis erstmalig ein Einschnüreffekt auftritt. Der kontinuierlich ansteigende Verlauf ist dabei mit AI bezeichnet. Zum Zeitpunkt tE3 weist die Glimmentladung zwischen den beiden Schweißelektroden die Schweißstromstärke IM3 auf. Zweckmäßigerweise wird die Anfangsstromstärke so niedrig gewählt, daß die durch den Lichtbogenpuls bewirkte Fasertemperatur noch nicht zur Auslösung des Einschnüreffekts ausreicht und in jedem Fall nicht zum Faserbruch führt.
   c) Zusätzlich oder unabhängig von der zeitlichen Abfolge von einzelnen Glimmentladungsimpulsen entsprechend Figur 2 kann es auch zweckmäßig sein, auf den Vermessungsbereich der Lichtleitfaser eine Abfolge von Glimmentladungsimpulsen abzugeben, deren Impulslänge sukzessive solange vergrößert wird, bis sich eine meßbare Einschnürung erstmals am Außenumfang der Lichtleitfaser zeigt. Das Stromstärke/Zeit-Diagramm von Figur 4 veranschaulicht schematisch eine solche zeitliche Abfolge von Glimmentladungsimpulsen. Bei im wesentlichen konstanter Entladestromstärke IM4 aller Entladestromimpulse wird zunächst die Impulslänge, d.h. Pulsdauer IP von einem Glimmentladungsimpuls zum zeitlich als nächstes folgenden Glimmentladungsimpuls schrittweise vergrößert, so daß die an die Lichtleitfaser abgegebene Wärmeleistung schrittweise vergrößert wird. Die Impulse folgen dabei etwa im selben zeitlichen Abstand ZA aufeinander. Zweckmäßigerweise wird die Impulslänge des Start- Lichtbogenimpulses PU1 so niedrig gewählt, daß die durch den Lichtbogenpuls bewirkte Fasertemperatur noch nicht zur Auslösung des Einschnüreffekts ausreicht und in jedem Fall nicht zum Faserbruch führt. Ihre Impulslänge wird solange gesteigert, bis schließlich der Einschnüreffekt beginnt. In der Figur 4 ist dies der Zeitpunkt tE4, bis zu dem k-1 Glimmentladungsimpulse mit Entladestromimpulsen PU1 mit PUk-1 abgegeben worden sind.

   Ab dem Zeitpunkt, ab dem jeweils der Einschnüreffekt einsetzt, wird dann die Lichtleitfaser an der jeweiligen Vermessungsstelle solange weiter erwärmt, bis eine definierte, vorgebbare Einschnürung (wie zum Beispiel Δd/2 in Figur 5) erreicht wird. Als Meßkriterium für die Einschnürwirkung des jeweiligen Schweißvorgangs kann dann insbesondere diejenige Zeitdauer ermittelt wird, die ausgehend vom ursprünglichen Außendurchmesser AD des Probe-Lichtleitfaserabschnitts LF, d.h. ab Einsetzen eines meßbaren Einschnüreffekts, zur Erreichung einer vorgebbaren, radialen Soll- Querschnittsreduzierung benötigt wird. Dabei wird die vorgegebene Soll- Querschnittsreduzierung zweckmäßigerweise derart festgelegt, daß ihr eine optimale Faserviskosität beim eigentlichen Verschweißen je zweier optischer Fasern zugeordnet ist.
   Um die vorgegebene Soll- Einschnürung, insbesondere Außendurchmesserverringerung zu erreichen, kann es insbesondere zweckmäßig sein, entsprechend Figur 2 ab dem Zeitpunkt tE2 Glimmentladurigsimpulse mit Entladestromimpulsen IPn+1 bis IPm konstanter Impulslänge sowie konstanter Entladestromstärke IM2 auf die Lichtleitfaser bis zum Zeitpunkt tA2 abzugeben, bei dem eine gewünschte radiale Soll- Einschnürtiefe Δd/2 erreicht wird. Die Entladestromstärke der Impulse IPn+1 mit IPm entspricht dabei insbesondere im wesentlichen der Entladestromstärke IM2 des Schweißstromimpulses IPn, bei dem der Einschnüreffekt gerade eingesetzt hatte.
   Auch bei der Impulsfolge entsprechend Figur 4 werden ab dem Zeitpunkt tE4 nur noch Glimmentladungsimpulse auf die jeweilige Vermessungsstelle der Lichtleitfaser abgegeben, deren Entladestromimpulse PUk mit PUn im wesentlichen dieselbe Entladestromstärke IM4 sowie dieselbe Impulslänge wie der Entladestromimpuls PUk-1 aufweisen, bei dem der Einschnüreffekt zum Zeitpunkt tE4 gerade erstmals einsetzt. Die Impulsfolge endet mit dem Entladestromimpuls PUn zum Zeitpunkt tE4, bei dem die gewünschte Soll- Einschnürtiefe Δd/2 erreicht wird.
   Genauso kann es zweckmäßig sein, entsprechend der Figur 3 ab dem Zeitpunkt tE3, ab dem erstmalig der Einschnüreffekt eintritt, eine kontinuierliche Glimmentladung zu erzeugen, deren Schweißstromstärke IS im wesentlichen konstant ist und vorzugsweise der Schweißstromstärke IM3 zum Zeitpunkt tE3 beim Einsetzen des Einschnüreffekts entspricht. Der konstante Verlauf des Entladestroms ab dem Zeitpunkt tE3 ist in der Figur 3 mit IK bezeichnet. Er endet zum Zeitpunkt tA3 bei Erreichen der jeweilig voreingestellten, gewünschten Einschnürtiefe.
   Das zeitliche Fortschreiten der Einschnürung und damit die Zunahme der Einschnürtiefe mit Zunahme der auf die jeweilige Vermessungsstelle abgegebenen Wärmemenge bzw. Hitzeleistung wird zweckmäßigerweise fortlaufend zum Beispiel durch optische Vermessung mit dem optischen Abbildungssystem VK von Figur 1 mit protokolliert.
   Ab dem Zeitpunkt wie zum Beispiel tE2 in Figur 2, ab dem erstmalig eine Einschnürung anfängt, kann aus den Meßgrößen wie zum Beispiel Einschnürtiefe, Zugspannung, Schweißstrom, Schweißzeit, usw. ein optimierter Schweißparametersatz vorzugsweise für das sogenannte Hauptschweißen zweier miteinander zu verbindender Lichtwellenleiter abgeleitet bzw. ermittelt werden.
   Zusammenfassend betrachtet kann also aus den Werten für die Zugspannung F, der erreichten Einschnürtiefe Δd/2, der verwendeten Schweißstromstärken, den Impulsdauern für die Schweißstromimpulse, der Totzeiten zwischen zwei zeitlich aufeinander folgenden Schweißstromimpulsen, usw. schließlich ein optimierter Schweißparametersatz (insbesondere für das Vor- und/oder Hauptschweißen) automatisch mit der Auswerte/Steuereinrichtung COM ermittelt und dort im Spleißgerät abgespeichert werden.
   Bevor die Lichtleitfaser erwärmt wird, wird zweckmäßigerweise ihr Faserdurchmesser an einer oder mehreren Längsstellen vermessen und dieser Wert in der Auswerte-/Steuereinrichtung wie zum Beispiel COM des Spleißgeräts abgespeichert. Dadurch steht ein Referenzwert für den Außendurchmesser AD der Lichtleitfaser zur Verfügung, gegenüber dem später die Einschnürung bzw. Einschrumpfung der Außenkontur der erwärmten Lichtleitfaser verglichen wird.
   Gegebenenfalls kann es zweckmäßig sein, das obige beschriebene Verfahren ein- oder mehrmals zu wiederholen, um eine Mittelung für einen oder mehrere der Schweißparameter vornehmen zu können.
   Weiterhin kann es ggf. zweckmäßig sein, als Meßkriterium für die Einschnürwirkung des jeweiligen Schweißvorgangs denjenigen Schweißstrom IS heranzuziehen, der ausgehend vom ursprünglichen Außendurchmesser AD des Probe-Lichtleitfaserabschnitts LF zur Erreichung der vorgebbaren, radialen Soll- Querschnittsreduzierung benötigt wird.
2. Gegebenenfalls kann es zweckmäßig sein, zusätzlich oder unabhängig zu den unter 1. aufgeführten Verfahrensschritten auch noch den Lichtleistungspegel von Meßlicht (wie zum Beispiel ML in Figur 1) zu messen, das im Probe-Lichtleitfaserabschnitt LF geführt wird. Dafür eignet sich insbesondere das sogenannte LID-Meßverfahren ("Light Injection and Detection"), wie es in der US 5,078,489 beschrieben worden ist. Vorzugsweise wird dabei der Lichtleistungspegel des im Probe-Lichtleitfaserabschnitt LF geführten Meßlichts bereits vor dem "Tapern" (=Einschnüren) der Lichtleitfaser gemessen. Der Lichtleistungspegel wird dann während der Erwärmungsphase oder jeweils nach jedem Schweißstromimpuls fortlaufend gemessen und insbesondere durch die Auswerte-/Steuereinrichtung COM von Figur 1 fortlaufend mitprotokolliert. Gegebenenfalls kann aus dem aufgenommenen Lichtleistungspegel ein Abbruchkriterium für die Taperung des Lichtleitfaserabschnitts abgeleitet werden. Der zeitliche Verlauf des Lichtleistungspegels kann dann bei der Ermittlung optimaler schweißparameter mit einbezogen werden.
3. Zweckmäßig kann es weiterhin auch sein, in das Schweißgerät bereits von vornherein zwei miteinander zu verschweißende Lichtwellenleiter einzulegen, die jeweils endseitig entcoatet sind. Dies veranschaulicht Figur 6. Dort ist in die Haltevorrichtung HV1 der Test- bzw. Schweißeinrichtung TV ein erster Lichtwellenleiter LW11 eingelegt und festgeklemmt. Er ist entlang einem Endabschnitt entcoatet, so daß dort seine Lichtleitfaser LF1 blank freiliegt. Von der Haltevorrichtung HV2 wird entsprechend dazu ein Lichtwellenleiter LW21 lagegesichert. Er ist endseitig entcoatet, so daß dort seine Lichtleitfaser LF2 blank freiliegt. Die beiden Lichtleitfasern LF11, LF21 werden stirnseitig in Kontakt miteinander gebracht und miteinander verschweißt, so daß eine Verbindungsstelle SS zwischen den beiden Stirnseiten der Lichtleitfasern LF11, LF21 gebildet ist. Auf diese Weise wird durch Verschweißung zweier Faserenden eine durchgehende Lichtleitfaser entsprechend LW von Figur 1 hergestellt. Dabei sind die verwendeten Schweißparameter zunächst noch nicht optimiert. Erst anschließend werden die unter 1. und/oder 2. aufgeführten Verfahrensschritte zur Überprüfung und Anpassung der Spleißparameter durchgeführt. Bei akzeptierbarer Dämpfung kann gegebenenfalls bereits dieser leicht "getaperte" Testspleiß in den Arbeitsspeicher der Auswerte/Steuereinrichtung für reguläre Spleißdämpfungen mit aufgenommen werden. Hierdurch kann insbesondere der zusätzliche manuelle Aufwand eines Testspleißes eventuell entfallen. Ansonsten werden die beiden (bei nicht optimierten Spleißparametern) miteinander verschweißten Lichtleitfasern LF11, LF21 voneinander getrennt, ihre Enden nochmals vorpräpariert und schließlich erst dann ihre Verschweißung mit optimierten Spleißparametern durchgeführt.
4. Zweckmäßig kann es sein, mehrere Testspleiße durchzuführen, und die jeweils dabei gewonnenen Parametersätze zu mitteln. Wird zudem bei mehreren durchgeführten Testspleißen festgestellt, daß die Faserviskositäten wechseln, so können insbesondere Rückschlüsse auf den Elektrodenzustand des Spleißgerätes getroffen werden. Gegebenenfalls kann der Benutzer automatisch zum Beispiel mit Hilfe der Auswerte/Steuereinrichtung COM automatisch zu einem Elektrodenwechsel oder deren Reinigung aufgefordert werden, wenn diese verschmutzt oder zu stark abgenutzt sind.
5. Zur Verspleißung unterschiedlicher Fasertypen, die voneinander abweichende Glaseigenschaften aufweisen, werden zweckmäßigerweise zwei getrennte Taperversuche zur Optimierung der Spleißparameter durchgeführt. Erfolgreich getestet wurden insbesondere folgende zwei unterschiedliche Vorgehensweisen:
   a) Es werden für jeden Fasertyp geeignete Parametersätze durch zwei separate Versuche entsprechend einem der unter 1. bis 3. aufgeführten Möglichkeiten ermittelt. Anschließend werden aus diesen, jedem Fasertyp zugeordneten Parametersätzen die optimalen Parameter für die Verschweißung der beiden unterschiedlichen Fasertypen abgeleitet.
   b) Die unterschiedlichen Fasertypen werden zunächst ohne optimierte Schweißparameter mit entsprechend hohem Spleißstrom für eine ausreichende Zugfestigkeit verschweißt. Anschließend wird die Spleißstelle in zwei Schritten rechtwinklig zur Position der Wärmequelle, insbesondere den beiden Elektroden, in z- Richtung derart verfahren, daß der jeweilige Schweißparametersatz entsprechend den Möglichkeiten unter 1. bis 3. für jeden Fasertyp getrennt ermittelt werden kann. Aus den Schweißparametersätzen für jeden Fasertyp können dann wieder die optimalen Schweißparamter für die Verschweißung dieser beiden unterschiedlichen Fasertypen abgeleitet werden.

Bevor nun jeweils mit der Verschweißung je zweiter optischer Fasern begonnen wird, wird nun für die neu, das heißt aktuell vorliegenden Umwelt- und/oder Umgebungsbedingungen eine Optimierung der Schweißverhältnisse auf folgende Art und Weise in vorteilhafter Weise durchgeführt:

Zunächst wird für die jeweils aktuell vorliegenden Schweißbedingungen mindestens ein Vorversuch an mindestens einem Probe- Lichtleitfaserabschnitt zur Ermittlung eines optimalen Schweißparametersatzes durchgeführt.
In diesem Vorversuch wird der Probe- Lichtleitfaserabschnitt während einer vorgebbaren Prüfzeitdauer einer definierten Zugspannung unterworfen. Während dieser Zugbelastung wird der Probe- Lichtleitfaserabschnitt an mindestens einer Längsstelle derart erwärmt, daß dort bei der Erwärmungsstelle am Außenumfang des Probe- Lichtleitfaserabschnitts unter der fortdauernden Zugbelastung eine Einschnürwirkung hervorgerufen wird. Diese Einschnürwirkung wird erfaßt und zur Optimierung des Schweißparametersatzes für die vorliegenden Schweißbedingungen herangezogen. Erst dann nach diesem mindestens einen Vorversuch wird mit dem ermittelten, optimierten Schweißparametersatz die Schweißverbindung je zweier, eigentlich miteinander zu verschweißender optischer Fasern hergestellt.

Insbesondere zeichnet sich die verschiedenen Varianten des erfindungsgemäßes Verfahrens zur Bestimmung optimaler Spleißparameter vor allem dadurch aus, daß das Verhältnis von Faserviskosität zu verwendetem Schweißstrom bei relativ geringen Temperaturen ermittelt werden kann. Dadurch kann eine Überhitzung der Lichtleitfasern und die damit verbundenen Nachteile, wie zum Beispiel Verdampfung des Glasmaterials der jeweiligen Lichtleitfaser und eine daraus resultierende Elektrodenverschmutzung, weitgehend vermieden werden. Weiterhin läßt sich das erfindungsgemäße Verfahren in vorteilhafter Weise bereits allein mit den in gängigen Spleißgeräten ohnehin vorhandenen Komponenten realisieren, das heißt eine zusätzliche Hardware ist üblicherweise nicht erforderlich. Insbesondere kommt das Verfahren zur Ermittlung eines optimalen Schweißparametersatzes bereits allein mit einer Faserpositionierung lediglich in Faserlängsrichtung aus, das heißt eine Faserpositionierung lateral, insbesondere senkrecht zur jeweiligen Faserlängsachse ist nicht erforderlich.

Aus diesem Grund kann das erfindungsgemäße Verfahren zur Ermittlung und Einstellung eines optimalen Schweißparametersatzes in vorteilhafter Weise auch in der Mehrfaser-Schweißtechnik, insbesondere zum Verschweißen von Lichtwellenleiter-Bändchen eingesetzt werden. Denn bei Lichtwellenleiter-Bändchen sind die Lichtleitfasern im Kunststoffmaterial eines gemeinsamen Bändchenmantels eingebettet, der auf ihnen aufsitzt und sie ringsum umgibt. Im Bändchenmantelmaterial sind die Lichtleitfasern vorzugsweise in einer gemeinsamen Lageebene im wesentlichen parallel zueinander angeordnet. Die Lichtleitfasern stehen somit in einer festen räumlichen Zuordnung zueinander. Das jeweilige Lichtwellenleiter-Bändchen kann somit nur als Ganzes verschoben werden; eine x-y-Ausrichtung zweier miteinander zu verschweißender Lichtwellenleiter-Bändchen ist somit in der Regel nur Schwierig oder gar nicht möglich. In der Figur 6 sind zur besseren Veranschaulichung Teilabschnitte zweier solcher Lichtwellenleiter- Bändchen BL1, BL2 zusätzlich strichpunktiert angedeutet. Das Lichtwellenleiter- Bändchen BL1 ist der linken Haltevorrichtung HV1, das zweite Bändchen BL2 der rechten Haltevorrichtung HV2 zugeordnet. Der Bändchenmantel des ersten Bändchens BL1 ist mit AH1, die Vielzahl von dort eingehüllten Lichtwellenleitern mit LW11 mit LW1n bezeichnet. Die Lichtwellenleiter LW11, LW21, mit denen mindestens ein Vorversuch zur Ermittlung und Einstellung eines optimalen Schweißparametersatzes - z.B. wie unter 3.) angegeben - durchgeführt wird, sind vorzugsweise Bestandteil der beiden Lichtwellenleiter- Bändchen BL1, BL2.

Weiterhin ermöglicht es das erfindungsgemäße Testverfahren in vorteilhafter Weise, die Schweißparametersätze jeweils automatisch zu ermitteln. Dadurch können zeitaufwendige und umfangreiche Versuchsreihen zur Ermittlung optimaler Spleißparameter vermieden werden.

Ein weiterer Vorteil des erfindungsgemäßen Verfahrens liegt insbesondere darin, daß eine im Schweißbereich durchgehende Lichtleitfaser bzw. zwei miteinander durchgehend verschweißte Lichtleitfaser-Enden wärmebehandelt werden. Mit anderen Worten ausgedrückt heißt das, daß die Bestimmung der Schweißparameter im wesentlichen am selben Meßobjekt sowie unter denselben Schweißbedingungen wie später die eigentliche schweißverbindung zwischen je zwei miteinander zu verbindenden Lichtwellenleiern durchgeführt wird. Der besondere Vorteil des erfindungsgemäßen Verfahrens liegt also darin, daß die Verhältnisse wie bei der Herstellung einer normalen Schweißverbindung nachgebildet werden. Damit sind bei der Spleißparameterbestimmung im wesentlichen die gleichen Mechanismen bzw. Effekte wirksam und auswertbar, wie sie bei der Herstellung der eigentlichen Schweißverbindung vorliegen und die bei einem normalen Spleiß über die Spleißdämpfung entscheiden.

Zusammenfassend betrachtet ist es somit in vorteilhafter Weise ermöglicht, für unterschiedliche Schweißbedingungen (wie zum Beispiel Luftfeuchtigkeit, Luftdruck, Fasertyp, Elektrodenzustand , usw.) einen individuell angepaßten Schweißparametersatz zu ermitteln, so daß eine optimale Glasviskosität während des schweißvorgangs erreicht werden kann. Ein solcher, an die jeweilig vorliegende Schweißsituation angepaßter Schweißparametersatz kann vereinfacht ausgedrückt indirekt über die Messung der Einschnürtiefe einer Test-Lichtleitfaser oder eines Test-Spleißes in Abhängigkeit von der verwendeten Spleißstromstärke, Schweißzeit sowie Zugspannung, unter der die Testlichtleitfaser oder der Testspleiß steht, erfolgen.

Die Optimierung der Spleißparameter kann im Idealfall bereits anhand eines einzigen Testspleißes durchgeführt werden. Zur genaueren Einstellung des Schweißparametersatzes kann es jedoch ggf auch zweckmäßig sein, mehrere Testspleiße durchzuführen und die daraus gewonnenen Parametersätze zu mitteln.

Weiterhin arbeitet das erfindungsgemäße Verfahren nur mit sehr geringen Erwärmungstemperaturen, so daß unerwünschte Verdampfungen von Glasmaterial des Probe-Lichtleitfaserabschnitts weitgehend vermieden sind. Dadurch verbleiben die Elektroden weitgehend sauber. Weiterhin sind dadurch auch weitgehend konstante Eigenschaften des Lichtbogens sichergestellt. Inbesondere behält er seine Geometrieform im wesentlichen bei.

Auf diese Weise ist es ermöglicht, mindestens einen der für den jeweiligen Schweißvorgang maßgebenden Schweißparameter (wie z.B. Schweißstromstärke, Schweißzeitdauer, usw.) unter einer Vielzahl praktischer Gegebenheiten an die jeweilig aktuell vorliegenden Schweißbedingungen (wie zum Beispiel Luftdruck, Luftfeuchtigkeit, Lufttemperatur, verwendeter Lichtleitfasertyp, Elektrodenzustand, usw.) in einfacher sowie zuverlässiger Weise anzupassen. Es können also mögliche, eine Qualität der Schweißverbindung bestimmende Größen umfassend miteinbezogen werden. Damit kann wechselnden bzw. unterschiedlichen Schweißverhältnissen Rechnung getragen werden, d.h. die Einstellung von Schweißparametern kann also in einfacher Weise so vorgenommen werden, daß eine möglichst gute, von Umwelt- und/oder Umgebungseinflüssen weitgehend unabhängige Schweißverbindung zwischen je zwei optischen Fasern herstellbar wird. Auf diese Weise läßt sich die Spleißqualität von thermischen Schweißverbindungen zwischen mindestens zwei Lichtleitfasern ganz erheblich verbessern.

Zusammenfassend betrachtet kann als Probe-Lichtleitfaserabschnitt sowohl ein entcoateter, durchgehender Faserabschnitt des jeweilig zu verschweißenden Lichtwellenleiters selbst verwendet werden. Zum anderen kann als Probe- Lichtleitfaserabschnitt gegebenenfalls auch ein Faserabschnitt einer eigens vorgesehenen Testfaser verwendet werden. Vorzugsweise wird für eine solche Testfaser ein Fasertyp gewählt, der dem Fasertyp der später eigentlich miteinander zu verschweißenden Lichtwellenleiter möglichst entspricht. Schließlich kann es auch noch zweckmäßig sein, den jeweiligen Probe-Lichtleitfaserabschnitt durch "normale" Verschweißung zweier Lichtleitfaserenden zu bilden, wozu deren optische Fasern bezüglich ihrer Außenkonturen weitgehend fluchtend aufeinander ausgerichet wurden.

Wird auf den jeweiligen Probe-Lichtleitfaserabschnitt eine definierte Zugspannung ausgeübt und ein Bereich seines gespannten Längsabschnitts in den Erwärmungsbereich eines Lichtbogens gebracht, um den Einschnüreffekt auszulösen, so kann in der Praxis das Problem auftreten, daß der unter Zug stehende Probe-Lichtleitfaserabschnitt in seinem Erwärmungsbereich zu schnell im Querschnitt reduziert wird und es dadurch zu schnell zum Faserbruch kommt. Beim Erwärmen durch den gezündeten Lichtbogen kann also die Viskosität des Probe-Lichtleitfaserabschnitts an dessen Erwärmungsstelle zu stark und zu schnell verringert werden. Mit anderen Worten ausgedrückt heißt das, daß der Beobachtungszeitraum für den Einschnürvorgang begonnen vom Auslösen des Einschnüreffekts bis zum Faserbruch zu kurz sein kann und aufgrund der dadurch bedingten zu geringen Dynamik des Einschnürvorgangs dessen praktische Auswertung nicht so ohne weiteres möglich ist. Würde beispielsweise mit dem niedrigst einstellbaren Schweißstrom von etwa 10 mA üblicher Lichtwellenleiter-Schweißgeräte der Lichtbogen kontinuierlich auf den Probe-Lichtleitfaserabschnitt abgegeben werden, so käme es an dessen Erwärmungsstelle unter der Annahme einer Arbeitsorthöhe von etwa 550 m NN (= über Normalnull) bereits nach einer Zeitspanne von weniger als 500 ms zum Faserbruch, die in der Praxis zur Analyse des Einschnürvorgangs zu gering wäre.

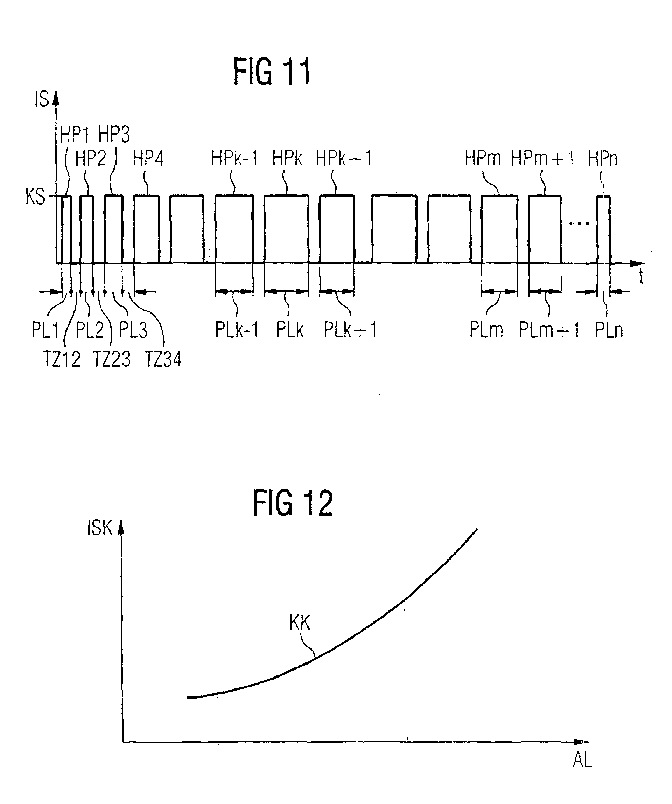

Damit in der Praxis eine Auswertung des Einschnürvorgangs möglich wird, wird die Erwärmung des Probe-Lichtleitfaserabschnitts in vorteilhafter Weise derart vorgenommen, daß an dessen Erwärmungsstelle die Fasertemperatur gegenüber einem herkömmlichen, kontinuierlich durchgeführten Erwärmungsvorgang verringert wird. Dazu wird auf die jeweilige Erwärmungsstelle des Probe-Lichtleitfaserabschnitts zweckmäßigerweise ein mit einer vorgebbaren Frequenz gepulster Lichtbogen abgegeben. Die Steuerung der Pulsabfolge kann dabei zweckmäßigerweise mit Hilfe der Auswerte-/Steuereinrichtung COM von Figur 1 bzw. 6 erfolgen, die über die Steuerleitungen LE1, LE2 die Elektroden EL1, EL2 entsprechend ansteuert. Der Probe-Lichtleitfaserabschnitt bzw. die Testfaser wird dabei lediglich in einem so langen Zeitraum erwärmt, während der der Lichtbogen gezündet ist, und kann sich bei anschließend ausgeschaltetem Lichtbogen wieder abkühlen. Auf die Testfaser wirkt also eine Vielzahl von Hitzeimpulsen in zeitlich aufeinander folgenden Erwärmungsintervallen mit dazwischenliegenden Totzeiten ein. Die Figuren 2, 4 sowie 11 veranschaulichen verschiedene zeitliche Abfolgen von solchen Hitzeimpulsen. Dadurch, daß zwischen je zwei aufeinanderfolgenden Hitzeimpulsen eine zeitliche Pause wie zum Beispiel TZ in Figur 2 oder Figur 11 eingehalten wird, wird der Testfaser die Möglichkeit zur Abkühlung gegeben. Auf diese Weise ergibt sich über die Zeit gemittelt eine konstant geringere Temperaturbelastung der Testfaser gegenüber einem herkömmlichen, kontinuierlich ausgeführten Erwärmungs- bzw. Schweißvorgang. Durch den Wechsel von Erwärmungs- und Abkühlungsphasen läßt sich somit die Viskosität des geschmolzenen Glasmaterials der Testfaser verringern und damit eine zeitlich langsamere Verjüngung des Faserquerschnitts erzielen. Durch den Pulsbetrieb des Lichtbogens wie zum Beispiel LB zwischen den beiden Schweißelektroden EL1, EL2 von Figur 1 läßt sich also die Einschnürung bzw. Verjüngung des Testfaserquerschnitts in gezielter Weise derart beeinflussen, daß der Einschnürvorgang bzw. Verjüngungsvorgang der Testfaser zeitlich gestreckt: bzw. zeitverzögert, das heißt in viele kleine Einzelverjüngungsschritte gestückelt werden kann, so daß ein ausreichend großer Beobachtungsszeitraum zur Auswertung des Gesamteinschnürvorganges zur Verfügung steht. In praktischen Versuchen konnten auf diese Weise Beobachtungszeiträume vorzugsweise zwischen 1 min und 10 min, insbesondere zwischen 1 und 4 min, bevorzugt um etwa 3 min, erreicht werden. Die zeitliche Aufspreizung des Einschnürvorganges läßt sich durch entsprechende Einstellung der Pulszeitdauer, während der der Lichtbogen eingeschaltet ist, der Pausenzeitdauer bzw. Totzeit, während der Lichtbogen ausgeschaltet ist, und/oder des Schweißstroms des jeweilig abgegebenen Hitzeimpulses bewirken und beeinflussen. Insbesondere läßt sich die Verjüngung der jeweiligen Testfaser durch Variation der Pulszeit und/oder Pausenzeit steuern, insbesondere regeln. Allgemein ausgedrückt läßt sich somit durch entsprechende Triggerung des Lichtbogens wie zum Beispiel LB von Figur 1 bzw. 6 die Testfaser in präzise kontrollierbarer Weise, das heißt dosiert verjüngen.

Da der Verjüngungsvorgang durch dieselben Umwelt- und/oder Umgebungsbedingungen (wie zum Beispiel Luftdruck, Luftfeuchtigkeit, Lufttemperatur, verwendeter Lichtleitfasertyp, Elektrodenzustand, usw.) wie beim normalen Verschweißen je zweier Lichtleitfasern beeinflußt wird, kann er als einfache und zuverlässige Korrekturgröße zur Anpassung, insbesondere Optimierung ein oder mehrerer Schweißparameter (wie zum Beispiel Schweißstromstärke, Schweißzeitdauer, Elektrodenabstand, usw.) bei den aktuell gegebenen Schweißbedingungen herangezogen werden.

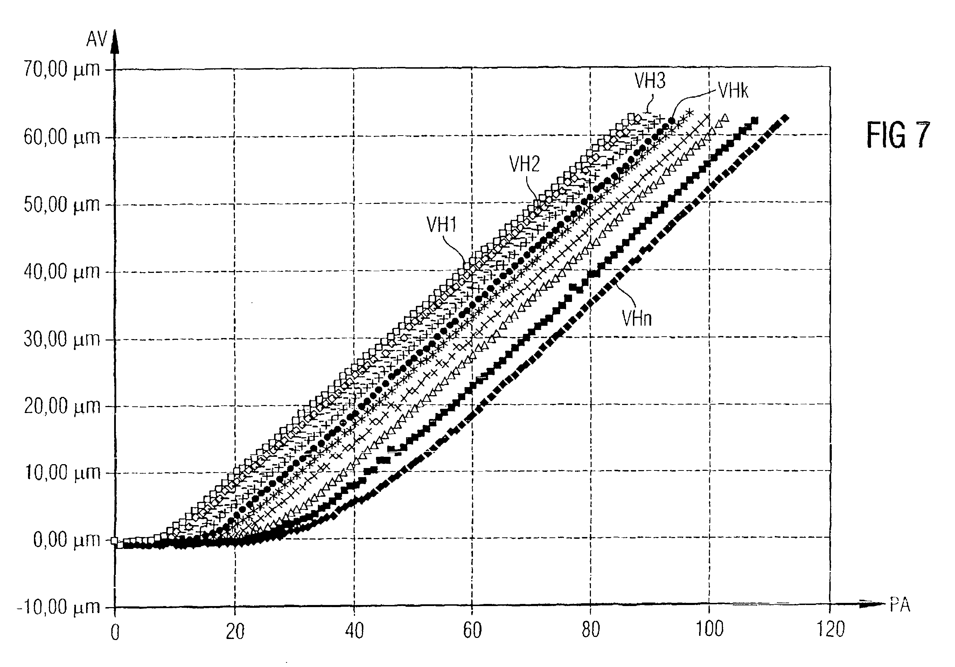

Zu diesem Zweck werden zunächst Eichmeßkurven entsprechend den Figuren 7 mit 10 ermittelt, um das zeitliche Verhalten des Verjüngungsvorgangs bei unterschiedlichen Umweltund/oder Umgebungsbedingungen aufzeichnen zu können. Insbesondere wurde folgende Vorgehensweise erfolgreich getestet:

Für den Pulsbetrieb des Lichtbogens LB (vergleiche Figur 1 bzw. Figur 6) wird die Entladungsstromstärke IS für alle abgegebenen Lichtbogenimpulse auf einen konstanten Wert wie zum Beispiel IS = KS (vergleiche Figur 11) eingestellt. Die Temperatur, die an der Erwärmungsstelle wie z.B. EZ des Probe-Lichtleitfaserabschnitts wie z.B. LF von Figur 1 wirksam wird, wird durch entsprechende Steuerung, insbesondere Regelung der Pulszeitdauer des jeweilig abgegebenen Hitzeimpulses eingestellt. Dabei wird für die Pausenzeit bzw. Totzeit zwischen je zwei aufeinanderfolgenden Hitzeimpulsen ein konstanter Wert festgesetzt. Figur 11 veranschaulicht schematisch die Verhältnisse einer solchen Hitzeimpulsabfolge anhand eines Schweißstromstärke-/Zeit-Diagramms. Entlang dessen Abszisse ist die Zeit t aufgetragen, während dessen Ordinaten die Schweißstromstärke IS zugeordnet ist. Die abgegebenen Hitzeimpulse sind durch entsprechende Schweißstromimpulse HP1 mit HPn stellvertretend gekennzeichnet. Für die Schweißstromimpulse HP1 mit HPn ist in erster Näherung jeweils eine Rechtecksform angenommen. Jedem Schweißstromimpuls HP1 mit HPn ist in der Figur 11 derselbe konstante Schweißstromwert IS = KS zugeordnet. Während je zwei zeitlich benachbarte Schweißstromimpulse wie zum Beispiel HP3, HP4 jeweils mit etwa konstanter Pausenzeit TZ34=TZ=konstant, das heißt im selben zeitlichen Abstand aufeinander folgen, variiert die zeitliche Länge, das heißt Zeitdauer der einzelnen Schweißstromimpulse HP1 mit HPn. Die Regelung der Testfasertemperatur erfolgt also hier im Ausführungsbeispiel über die Pulszeit. Genauso kann es selbstverständlich auch zweckmäßig sein, zusätzlich oder unabhängig hiervon eine Temperaturregelung durch entsprechende Variation der Pausenzeiten herbeizuführen. In vorliegendem Testbeispiel wurde für die Pausenzeiten zwischen den in zeitlichen Abstand aufeinander folgenden Schweißstromimpulsen HP1 mit HPn ein konstanter Abkühlungszeitraum von vorzugsweise etwa 1 sec festgelegt.

Zweckmäßigerweise wird die Impulslänge bzw. Pulszeit PL1 des ersten Hitzeimpulses, das heißt Startimpulses HP1 so gering gewählt, daß die durch diesen ersten Lichtbogenimpuls bewirkte Fasertemperatur nicht sofort zum Faserbruch führt. Bevorzugt wird die Pulszeit PL1 des Startimpulses HP1 so gering gewählt, daß die durch ihn bewirkte Fasererwärmung noch nicht einmal zum Eintritt des Einschnüreffekts ausreicht. In der darauffolgenden ersten Pausenzeit TZ12=TZ=konstant wird dann mit Hilfe des Bildverarbeitungssystems VK von Figur 1 bzw. 6, insbesondere einer Videokamera der Außendurchmesser des Probe-Lichtleitfaserabschnitts LF an dessen Erwärmungsstelle EZ ermittelt. Dieser ermittelte Außendurchmesserwert wird in der Auswerte-/Steuereinrichtung COM von Figur 1 bzw. 6 insbesondre durch Differenzbildung mit dem ursprünglichen Außendurchmesser AD (vgl. Figur 5) des Probe-Lichtleitfaserabschnitts LF vor dessen Erwärmung verglichen. Dadurch kann in einfacher Weise eine etwaige Faserverjüngung, das heißt Reduzierung des ursprünglichen Faseraußendurchmessers ermittelt werden. Als Meßkriterium für die Einschnürwirkung jedes abgegebenen Hitzeimpulses kann es somit in der nachfolgenden Pausenzeit die Verringerung des Außendurchmessers AD (vergleiche Figur 5) des Probe-Lichtleitfaserabschnitts LF an der Erwärmungsstelle EZ herangezogen werden.

Im folgenden wird der zeitliche Verlauf der Faserjüngung bei einer ersten zugeordneten Ortshöhe H1 erfaßt und zur Auswertung bereitgestellt. Die Ortshöhe ist dabei durch einen bestimmten Luftdruckwert gekennzeichnet. Dieser Luftdruckwert kann vorzugsweise in einer üblichen Druckkammer bereitgestellt werden. Um bei diesem Luftdruckwert, der eine erste Höhenlage H1 repräsentiert, eine Eichmeßkurve aufzunehmen, die den Zusammenhang zwischen der Faserverjüngung und der Anzahl der abgegebenen Hitzeimpulse wiedergibt, wird die Schweißeinrichtung TV von Figur 1 bzw. 6 mit dem Probe- Lichtleitfaserabschnitt LF zweckmäßigerweise in diese Druckkammer eingebracht. Wird in der Pausenzeit TZ12 nach dem ersten Hitzeimpuls HP1 (vergleiche Figur 11) mit Hilfe des Bildverarbeitungssystems VK von Figur 1 bzw. 6, insbesondere einer Videoauswerteeinrichtung, noch keine Verjüngung der Testfaser festgestellt, so wird die Pulszeit, das heißt Pulslänge PL2 des nachfolgenden, zweiten Hitzeimpulses HP2 gegenüber der Pulslänge PL1 des ersten Hitzeimpulses HP1 verlängert. In der dem zweiten Hitzeimpuls HP2 nachfolgenden Pausenzeit TZ23=TZ=konstant wird wiederum mit Hilfe der Videoauswerteeinrichtung der Schweißeinrichtung TV von Figur 1 bzw. 6 überprüft, ob sich schon eine Verjüngung der Testfaser ergibt. Die Pulszeiten bzw. Pulslängen der Hitzeimpulse werden sukzessive so lange erhöht, bis sich eine bestimmte, vorher festgelegte Querschnittsreduzierung der Testfaser einstellt. Dabei wird in der Lichtbogenpause nach jedem Hitzeimpuls jeweils mit Hilfe des Bildverarbeitungssystems VK von Figur 1 bzw. 6 die etwaig bewirkte Querschnittsreduzierung, das heißt Verjüngung der Testfaser ermittelt. Ab demjenigen Hitzeimpuls, ab dem erstmalig eine bestimmte vorgegebene und meßbare Querschnittsreduzierung der Testfaser initiiert, das heißt ausgelöst wird, wird die Pulszeit der nachfolgenden Hitzeimpulse nun derart geregelt, das sich pro Hitzeimpuls jeweils eine vorgebbare, konstante Querschnittsreduzierung der Testfaser einstellt. Allgemein ausgedrückt wird also eine Vielzahl von Hitzeimpulsen derart gesteuert, insbesondere geregelt, daß an der Erwärmungsstelle EZ pro Hitzeimpuls eine im wesentlichen konstante Querschnittsreduzierung der Testfaser, das heißt konstante Verjüngung des Außendurchmessers AD des Probe-Lichtleitfaserabschnitts LF erreicht wird. Bei der praktischen Realisierung der Parameteroptimierung wurde vorzugsweise eine Querschnittsreduzierung der Testfaser von etwa 1 µm pro Hitzeimpuls angestrebt. Nachfolgende Tabelle veranschaulicht nochmals anhand einer beispielhaften Hitzeimpulsreihe das Grundprinzip der Pulszeitenregelung, um pro abgegebenen Hitzeimpuls eine annäherungsweise konstante weitgehend Faserguerschnittsreduzierung, das heißt eine weitgehend konstante Verjüngung der Testfaser zu erzielen:

### Testbeispiel:

Angestrebte Querschnittsreduzierung = 1 µm pro Hitzeimpuls

| | | |
|---|---|---|
| Startpuls | 70ms | 0µm |
| 2. Puls | 120ms | 0µm |
| 3.Puls | 170ms | 0,1µm |
| 4.Puls | 200ms | 0,5µm |
| 5. Puls | 220ms | 1µm |
| 6. Puls | 220ms | 1µm |
| 7. Puls | 220ms | 1µm |

usw.

Das Testbeispiel zeigt, daß der Start-Hitzeimpuls zunächst so gering gewählt wird, daß noch kein Einschnüreffekt und schon gar nicht ein Faserbruch eintritt. Die Pulszeit der nachfolgenden Hitzeimpulse wird dann schrittweise erhöht, bis sich erstmals eine meßbare Einschnürung des Faserquerschnitts zeigt. Hier im Testbeispiel wird erstmals eine meßbare Querschnittsreduzierung in der Pausenzeit nach dem dritten Hitzeimpuls von 0,1 µm erfaßt. Ab diesem Hitzeimpuls, ab der sich erstmals eine vorgegebene meßbare Querschnittsreduzierung der Testfaser einstellt, wird mit der Pulszeitregelung besgonnen und zwar dahingehend, daß sich in erster Näherung eine konstante Faserverjüngung pro abgegebenen Hitzeimpuls einstellt. Im vorliegenden Testbeispiel wird mit der Pulszeit als Regelgröße ab dem fünften abgegebenen Hitzeimpuls die angestrebte, konstante Querschnittsreduzierung von 1 µm pro Hitzeimpuls erzielt.

Dieses typische zeitliche Verhalten der Pulszeiten ist nochmals schematisch in Figur 11 veranschaulicht. Dort nehmen die Pulszeiten der Hitzeimpulse ausgehend vom Startimpuls HP1 bis zum Hitzeimpuls HPk zu, ab dem sich erstmal ein meßbarer Einschnüreffekt an der Testfaser zeigt. Die Pulszeiten PLk+1 mit PLm der nach dem Hitzeimpuls HPk folgenden Hitzeimpulse HPk+1 mit HPm variieren dann, um die Regelung auf eine konstante Faserquerschnittsreduzierung pro abgegebenen Hitzeimpuls sicherzustellen.

Bei der vorgegebenen, ersten Ortshöhe H1 wird nun nach diesem Regelprinzip eine Meßreihe aufgenommen, bei der jedem abgegebenen Hitzeimpuls die in der nachfolgenden Pausenzeit gemessene Faserquerschnittsreduzierung zugeordnet wird. Figur 7 zeigt ein solches Diagramm, entlang dessen Abszisse die Nummer PA des jeweiligen Hitzeimpulses sowie entlang dessen Ordinaten die jeweils zugeordnete Querschnittsreduzierung, bzw. - verjüngung AV aufgetragen ist. Für die erste simulierte Ortshöhe H1 ergibt sich die Meßreihe VH1. Jeder gemessene Verjüngungswert der Testfaser ist dabei durch ein kleines, leeres Quadrat gekennzeichnet. In analoger Weise zur ersten Meßreihe VH1 lassen sich weitere Meßreihen VH2 mit VHn für weitere, schrittweise steigende Ortshöhen H2 mit Hn aufzeichnen. In der Figur 7 ist die Meßreihe VH1 einer ersten Ortshöhe H1, die Meßreihe VH2 einer nächsthöheren Ortslage H2 > H1, die dritte Meßreihe VH3 einer wiederum größeren Ortshöhe H3 > H2 > H1 zugeordnet. Die Meßreihe VHn ist schließlich einer Ortshöhe Hn zugeordnet, die größer als die Ortshöhen H1 mit Hn-1 der übrigen Meßreihen VH1 mit VHn-1 ist. Für die Höhen H1 mit Hn, bei denen die verschiedenen Meßreihen VH1 mit VHn von Figur 7 aufgenommen wurden, gilt also:
Hn > Hn-1 > ..... > H2 > H1.

Insgesamt betrachtet ergibt sich somit ein Kennlinienfeld, das die Abhängigkeit der gemessenen Faserquerschnittsreduzierung AV in Abhängigkeit von der jeweiligen Hitzeimpulsnummer PA wiedergibt. Die Querschnittsreduzierungs-Meßwerte der jeweiligen Meßreihe sind dabei in Figur 7 jeweils durch dieselben Symbole wie zum Beispiel Kreuzchen, Dreiecke, Minuszeichen usw. gekennzeichnet.

Die aufgezeichneten Meßreihen VH1 mit VHn von Figur 7 zeigen bei erster Betrachtung jeweils denselben typischen Verlauf:

Im Anfangsbereich der jeweiligen Meßreihe tritt praktisch keine Verjüngung AV der Testfaser auf. Alle Meßreihen VH1 mit VHn weisen also einen flach, insbesondere waagerecht verlaufenden Anfangsbereich auf, entlang dem sich noch keine meßbare Querschnittsreduzierung AV der Testfaser zeigt. Im vorliegenden Meßbeispiel ist dies in erster Näherung der Bereich zwischen dem 1. und 20. Hitzeimpuls. Ab etwa dem 40. Hitzeimpuls wird bei allen Meßreihen die Pulslänge, das heißt Pulszeit und damit die Erwärmung der Testfaser groß genug, daß sich pro abgegebenen Hitzeimpuls eine konstante Faserverjüngung einstellt. Ab dem 40. Hitzeimpuls verlaufen deshalb alle Meßreihen VH1 mit VHn in erster Näherung in Form einer Geraden. Zur Aufzeichnung der Eichmeßkurven von Figur 7 für verschiedene simulierte Ortshöhen H1 mit Hn wurden jeweils zweckmäßigerweise die Querschnittsreduzierungswerte von mindestens 80 abgegebenen Hitzeimpulsen, vorzugsweise zwischen 80 und 120 abgegebenen Hitzeimpulsen ermittelt. Für die Praxis kann es zweckmäßig sein, die Querschnittsreduzierungswerte so vieler abgegebener Hitzeimpulse aufzuzeichnen, bis schließlich der ursprüngliche Außendurchmesser der Testfaser auf etwa die Hälfte reduziert worden ist.

In Abhängigkeit von der zugeordneten Ortshöhe ergibt sich für die Meßreihen VH1 mit VHn folgender Zusammenhang:

Je größer die Ortshöhe gewählt wird, das heißt je niedriger der Luftdruck wird, desto länger dauert es, die Pulszeit so zu regeln, daß sich eine konstante Verjüngung der Testfaser pro abgegebenen Hitzeimpuls einstellt. Je niedriger nämlich der Luftdruck mit zunehmender Ortshöhe wird, desto mehr Energie wird erforderlich, um denselben Heizeffekt wie bei niedrigerer Ortshöhe zu erreichen. In der Figur 7 verlaufen deshalb die unterschiedlichen Meßreihen VH1 mit VHn bezüglich ihres geradlinigen Teilabschnitts annäherungsweise parallel sowie in Abzissenrichtung versetzt zueinander. Je größer die zugehörige Ortshöhe wird, desto mehr wandert der geradlinige Teilabschnitt der jeweiligen Meßreihe nach rechts. Denn je größer die Ortshöhe wird, desto größer wird die Anzahl der abzugebenden Impulse, um erstmals einen Einschnüreffekt bei der Testfaser auslösen zu können. Die Meßreihen VH1 mit VHn sind bezüglich ihres annäherungsweise geradlinig verlaufenden Teilabschnitts in Abszissenrichtung gegeneinander versetzt. Der Grund dafür ist, daß der Einschnürvorgang umso später einsetzt, je größer die Ortshöhe, das heißt je geringer der Luftdruck wird. In der Figur 7 ergibt sich so zum Beispiel bei der Meßreihe VH1 für die niedrigste Meßhöhe H1 bereits ein zeitlich konstanter Einschnüreffekt ab etwa dem 20. Hitzeimpuls. Demgegenüber verläuft die Meßreihe VHn, die der im Meßbeispiel größten Höhe Hn zugeordnet ist, selbst noch nach Abgabe des zwanzigsten Hitzeimpulses weitgehend waagerecht, da noch kein Einschnüreffekt ausgelöst werden konnte.

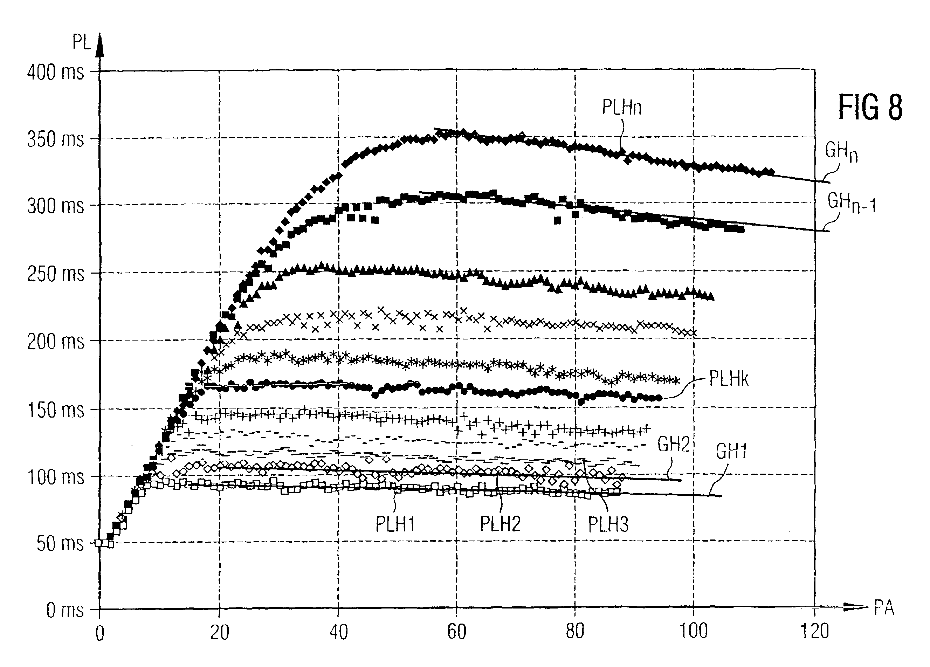

Figur 8 zeigt für die Meßreihenscharen VH1 mit VHn von Figur 7 ein zugehöriges Pulszeit-/Impulsnummern-Diagramm. Entlang der Abszisse sind die Nummern PA der abgegebenen Hitzeimpulse aufgetragen. Diesen Impulsnummern PA sind entlang der Ordinaten zugehörige Hitzeimpulslängen PL zugeordnet, die sich bei dem praktisch realisierten Regelungsprinzip zur Erzeugung einer konstanten Querschnittsreduzierung pro Hitzeimpuls ergeben. Die Meßreihen für die Pulslängen jedes abgegebenen Hitzeimpulses sind mit PLH1 mit PLHn für die unterschiedlich vorgegebenen Ortshöhen H1 mit Hn bezeichnet. In der Figur 8 sind dabei die Pulszeiten, die derselben Ortshöhe H1 mit Hn wie die zugehörigen Querschnittsreduzierungsmeßwerte AV von Figur 7 zugeordnet sind, mit denselben Symbolen versehen; die Pulszeiten für die erste Höhenlage H1 sind so zum Beispiel mit leeren Quadraten gekennzeichnet.

In der Figur 8 weisen die Meßreihen PLH1 mit PLHn für die Pulszeiten PL der abgegebenen Hitzeimpulse ebenfalls einen charakteristischen Verlauf auf:

Die den verschiedenen Höhenlagen H1 mit Hn zugeordneten Meßreihen PLH1 mit PLHn steigen zunächst jeweils stell bis zu einem Maximum der Pulslänge PL an. Ab dieser maximalen Pulszeit geht jede Meßreihe dann in erster Näherung :in eine flach abfallende Gerade über. Der steil ansteigende Anfangsverlauf jeder Meßreihe rührt davon her, daß es erst einer bestimmten Anzahl von abgegebenen Hitzeimpulsen braucht, um pro abgegebenen Hitzeimpuls eine konstante Querschnittsreduzierung einzuregeln. Etwa ab dem Maximum der jeweiligen Meßreihe PLH1 mit PLHn setzt dann pro abgegebenen Hitzeimpuls eine konstante Faserverjüngung ein. Der flach abfallende, annäherungsweise geradlinige Verlauf der jeweiligen Meßreihe bedeutet, daß sich die auf eine konstante Verjüngung geregelten Pulszeiten der abgegebenen Hitzeimpulse wieder verringern. Dies ist dadurch erklärbar, daß sich mit abnehmendem Faserquerschnitt eine umso schnellere Erwärmung der Testfaser einstellt, d.h. die Testfaser würde bei gleichbleibenden Pulszeiten umso mehr verjüngt werden, je kleiner ihr Faserquerschnitt wird. Dieser Effekt wird bei der Regelung durch eine Verringerung der Pulszeiten ausgeglichen. Dies zeigt die Hitzeimpulsabfolge von Figur 11 nochmals in schematischer Darstellung. Ab dem Hitzeimpuls HPm bis zum letzten Hitzeimpuls HPn nehmen deren Pulslängen PLm mit PLn langsam ab.

Die annäherungsweise geradlinig verlaufenden Teilabschnitte der Meßreihen PLH1 mit PLHn von Figur 8 sind in Ordinatenrichtung gegeneinander versetzt, das heißt je zwei benachbarte Meßkurven wie zum Beispiel PLH1, PLH2 weisen bezüglich ihres geradlinig verlaufenden Teilabschnitts einen bestimmten Pulszeitenabstand PL voneinander auf. Die Meßkurven PLH1 mit PLHn sind also voneinander separiert. Dadurch ist es ermöglicht, jeder Meßhöhenlage H1 mit Hn eine Meßreihe PLH1 mit PLHn in eindeutiger Weise zuzuordnen. Der niedrigsten Meßkurve PLH1 ist dabei die niedrigste Meßhöhenlage H1 zugeordnet. Die zweite, nächst höher liegende Meßreihe PLH2 ist der nächst höheren Meßhöhenlage H2 > H1 zugewiesen, und so weiter. Die in Figur 8 am höchsten verlaufende Meßreihe PLHn ist schließlich der größten Ortshöhe Hn der hier im Testbeispiel ausgewählten Meßhöhenlagen zugeordnet. Allgemein ausgedrückt liegt das Maximum und der sich anschließende geradlinige Teilabschnitt der jeweiligen Meßreihe PLH1 mit PLHn umso höher, je größer die Meßhöhe zur Aufnahme des Einschnürvorgangs wird. Der Grund dafür ist, daß die Temperatur des Lichtbogens und damit die Erwärmung der Testfaser vom Luftdruck abhängig ist. Je geringer der Luftdruck ist, das heißt je größer die simulierte Meßhöhe wird, desto mehr Energie ist aufzuwenden, um die gleiche Fasertemperatur zu erreichen. Bei dem auf konstante Querschnittsverjüngung getriggerten Pulsbetrieb des Lichtbogens wirkt sich eine Verringerung des Luftdrucks durch längere Pulszeiten aus. Damit die gleiche Verjüngung pro abgegebenen Hitzeimpuls erreicht werden kann, ist bei niedrigerem Luftdruck eine längere Pulszeit erforderlich. Die Pulszeiten der Meßreihe PLHn bei der im Meßbeispiel größten Meßhöhe Hn sind also gegenüber den Pulszeiten der übrigen Meßreihen am größten. Je größer die Meßhöhe wird, desto länger werden die Pulszeiten der jeweiligen Meßreihe.

Bei den Meßreihen PLH1 mit PLHn von Figur 8 ist weiterhin auffallend, daß ihre in erster Näherung geradlinig verlaufenden, flach abfallenden Teilabschnitte im wesentlichen parallel zueinander liegen. Ab dem Maximum der Pulszeiten PL der jeweiligen Meßreihe wird für die nachfolgenden, aufgenommenen Pulszeiten-Meßwerte zweckmäßigerweise durch Funktionenaproximation eine kontinuierliche Geradenfunktion gewonnen. In Figur 8 ist beispielhaft für die ersten beiden Meßreihen PLH1, PLH2 sowie die letzten beiden Meßreihen PLHn- 1, PLHn jeweils eine solche Approximationsgerade GH1, GH2 bzw. GHn- 1, GHn zusätzlich mit eingezeichnet.

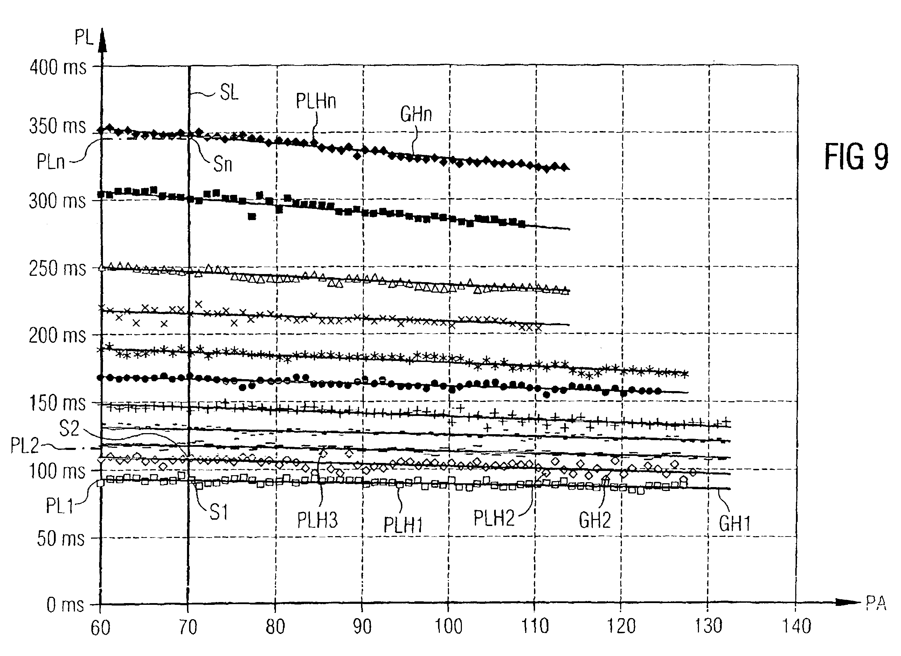

Das Pulszeiten-/Pulsnummern-Diagramm von Figur 9 zeigt in vergrößerter Darstellung die rechte Bildhälfte von Figur 8 ab der Pulsnummer PA=60 mit den annäherungsweise geradlinig verlaufenden Teilabschnitten der Meßreihen PLH1 mit PLHn. In der Figur 9 ist für die jeweilige Meßreihe PLH1 mit PLHn jeweils zusätzlich die durch Funktionenapproximation gewonnene Pulszeitengerade GH1 mit GHn eingezeichnet. Aus den Meßreihen PLH1 mit PLHn, insbesondere den durch Mittelung gewonnenen Pulszeitengeraden GH1 mit GHn, kann nun eine Relation zwischen Pulszeit und Meßhöhe abgeleitet werden. Der geradlinige Teilverlauf der Meßreihen PLH1 mit PLHn ist nämlich dadurch miteinander vergleichbar, das für die unterschiedlichen Meßhöhenlagen jeweils derselbe Lichtbogen-Pulsbetrieb mit denselben Meßkriterien durchgeführt wurde. Insbesondere wurde jeweils für alle Meßreihen lediglich die Pulszeit variiert und zwar so, daß jeweils eine konstante Faser-Querschnittsreduzierung pro abgegebenen Hitzeimpuls sichergestellt wurde. Die verschiedenen Pulszeitengeraden GH1 mit GHn unterscheiden sich durch verschiedene Ordinatenlagen voneinander; es ist deshalb zwewckmäßig, die Pulszeitengeraden GH1 mit GHn mit einer Linie SL zu schneiden, die parallel zur Ordinaten PL verläuft und einem festen Abzissenwert zugeordnet wird. Die Schnittlinie SL wird beispielsweise bei der Pulsnummer PA = 40 festgelegt. Die Linie SL schneidet die erste Pulszeitengerade GH1 am Schnittpunkt S1. Diesem ersten Schnittpunkt S1 ist die Höhenlage H1 sowie die Pulszeit PL1 zugeordnet. Entsprechend dazu ist dem Schnittpunkt S2 zwischen der zweiten Pulszeitengeraden GH2 und der Schnittlinie SL die Höhenlage H2 sowie die Pulszeit PL2 zugeordnet. Auf diese Weise kann für einen festgelegten Abszissenwert wie zum Beispiel PA = 40 in eindeutiger Weise für jede Meßhöhe H1 mit Hn jeweils eine zugehörige Pulszeit PL1 mit PLn zugewiesen werden. In der Figur 9 sind die Meßpunkte S1 mit Sn also demselben Abszissenort zugeordnet, das heißt derselben Pulsnummer und zwar nachdem für jede Meßreihe bereits eine konstante Querschnittsreduzierung pro abgegebenen Hitzeimpuls erreicht wurde.

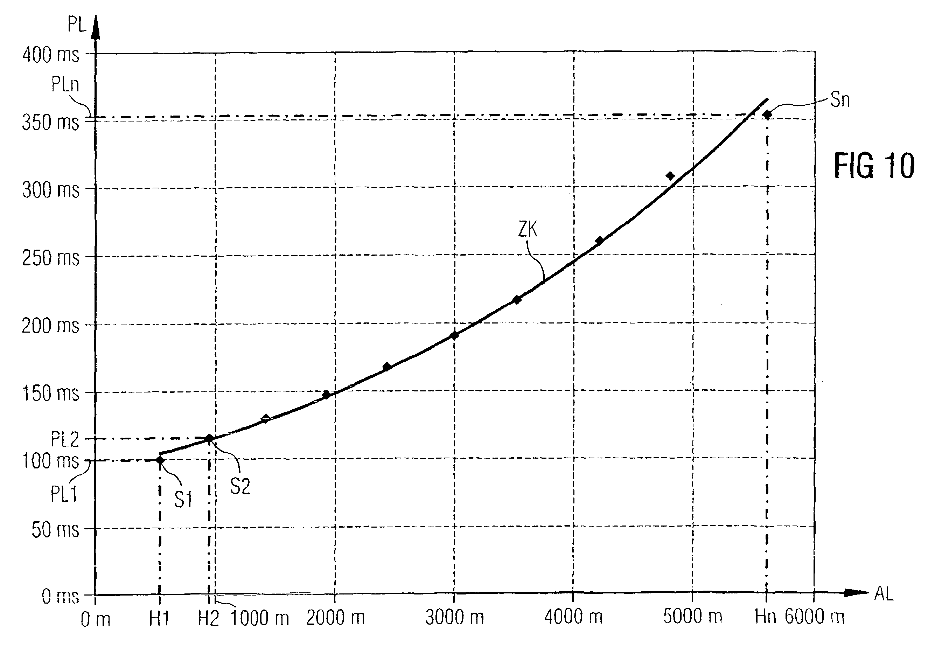

Diese Zuordnung zeigt Figur 10 anhand eines Pulszeiten/Meßhöhendiagramms PL/AL. Entlang der Abszisse ist die jeweilige Höhenlage AL, entlang der Ordinaten die zugeordnete Pulszeit PL aufgetragen. Jeden Schnittpunkt S1 mit Sn in Figur 9 wird in der Figur 10 jeweils eine bestimmte Höhe H1 mit Hn sowie eine zugehörige Pulszeit PL1 mit PLn zugeordnet. Für die einzelnen Meßpunkte S1 mit Sn läßt sich dann durch Funktionenapproximation eine Pulszeitenkurve ZK ermitteln, die die Abhängigkeit der Pulszeit von der Meßhöhe wiedergibt. Die ermittelte Pulszeitenkurve ZK entspricht für das vorliegende Ausführungsbeispiel in erster Näherung einer e-Funktion. Mit Hilfe der ermittelten Pulszeitenkurve ZK ist folgender Zusammenhang zwischen der Pulszeit und der Höhenlage ablesbar: Je größer die Höhenlage wird, desto größer wird die Pulszeit.

Zweckmäßigerweise wird lediglich die einzelne, aufgrund der Eichmeßkurven entsprechend den Figuren 8, 9 ermittelte Pulszeitenkurve ZK von Figur 10 entweder formelmäßig oder tabellarisch in der Auswerte-/Steuereinrichtung COM der Schweißeinrichtung TV von Figur 1 bzw. 6 für deren praktischen Arbeitsbetrieb dauerhaft abgelegt. (Die zur Ermittlung der Pulszeitenkurve ZK von Figur 10 dienenden Eichmeßkurven gemäß den Figuren 7 mit 10 brauchen selbst nicht im Speicher des jeweiligen Spleißgeräts festgehalten werden. Darüberhinaus brauchen neue Eichmeßkurven bei der praktischen Arbeit mit dem Spleißgerät nicht mehr aufgenommen werden.)

Zusammenfassend betrachtet repräsentiert die Pulszeitenänderung bei unterschiedlichen Meßhöhen letztendlich eine Änderung der Fasertemperatur. Veränderungen der Außentemperatur, Luftfeuchtigkeit, Elektrodenqualität können ebenfalls eine Veränderung der Fasertemperatur zur Folge haben, die sich wiederum durch unterschiedliche Pulszeiten bemerkbar macht. Der veränderten Pulszeit kann dann mit Hilfe der Pulszeitenkurve ZK von Figur 10 eine bestimmte Höhe zur entsprechenden Korrektur mindestens eines Schweißparameters, insbesondere des Schweißstroms, fiktiv zugeordnet werden.

Bevor nun jeweils mit der Verschweißung je zweiter optischer Fasern begonnen wird, wird nun für die neu, das heißt aktuell vorliegenden Umwelt- und/oder Umgebungsbedingungen eine Optimierung der Schweißverhältnisse auf folgende Art und Weise in vorteilhafter Weise durchgeführt:

In mindestens einem Vorversuch wird zunächst mindestens ein Probe-Lichtleitfaserabschnitt während einer vorgebbaren Prüfzeitdauer einer definierten Zugspannung unterworfen. Während dieser Zugbelastung wird der Probe-Lichtleitfaserabschnitt an mindetens einer Längsstelle derart erwärmt, daß dort bei der Erwärmungsstelle am Außenumfang des Probe-Lichtleitfaserabschnitts unter der fortdauernden Zugbelastung eine Einschnürwirkung hervorgerufen wird. Insbesondere wird auf den Probe-Lichtleitfaserabschnitt nach derselben Methode wie zur Ermittlung der Eichmeßkurve nach Figur 9 bzw. 10 eine Folge von Hitzeimpulsen (z.B. entsprechend Figur 11) abgegeben. Die Pulszeit dieser Hitzeimpulse wird vorzugsweise derart geregelt, daß sich eine konstante Verjüngung des Faserquerschnitts pro abgegebenen Hitzeimpuls einstellt. Bei den jeweilig, d.h. aktuell vorliegenden Schweißbedingungen werden also insbesondere die Pulslängen derjenigen Hitzeimpulse als Meßkriterium für die Einschnürwirkung ermittelt, ab denen eine im wesentlichen konstante Durchmesserreduzierung des Probe-Lichtleitfaserabschnitts pro abgegebenen Hitzeimpuls einsetzt. Für alle sonstigen Schweißparameter wie zum Beispiel Totzeit, Schweißstromstärke werden dieselben Werte wie bei der Aufnahme der Eichmeßkurven eingestellt. Durch den Pulsbetrieb des Lichtbogens kann somit in analoger Weise zu den Meßreihen von Figur 8 bzw. 9 eine Pulszeiten-Meßreihe aufgenommen werden. Bei derselben Pulsnummer wie bei der Aufnahme der Eichmeßkurven von Figur 8 bzw. 9, das heißt mit demselben Abszissenwert PA wird dann die sich jetzt neu ergebende Pulszeit abgelesen. Mit Hilfe der fest abgespeicherten Eichmeßkurve ZK von Figur 10 kann dann dieser Pulszeit eine bestimmte, fiktive Höhe zugeordnet werden. Aus der so ermittelten Höhe kann schließlich mit Hilfe der Auswerte-/Steuereinrichtung des Schweißgeräts automatisch eine Schweißstromanpassung für die nachfolgende, eigentliche Verschweißung optischer Fasern durchgeführt werden. Figur 12 zeigt schematisch eine Korrekturkurve KK für den Schweißstrom in Abhängigkeit von der fiktiv zugeordneten Höhe AL. Je größer die fiktiv zugeordnete Höhe AL wird, desto größer wird der Stromkorrekturfaktor ISK, um eine optimale Erwärmung der miteinander zu verschweißenden Fasern zu erreichen.

Selbstverständlich kann es auch zweckmäßig sein, die Pulszeitenkurve ZK von Figur 10 in Papierform dem Benutzer zur Verfügung zu stellen, der dann von Hand jeweils die zur ermittelten Pulszeit passende Höhe heraussuchen kann.

Bei dem erfindungsgemäßen Meßprinzip wird sich also die Einschnürwirkung eines unter Zugspannung stehenden Probe-Lichtleitfaserabschnitts zu Nutze gemacht. Insbesondere durch Pulsen des Lichtbogens kann eine Zeitverzögerung für diesen Einschnürvorgang erreicht werden, so daß dieser über einen ausreichend großen Beobachtungszeitraum aufnehmbar ist. Der Einschnürvorgang kann dann zur Optimierung mindestens eines Schweißparameters, hier im Ausführungsbeispiel des Schweißstroms bei den konkret vorliegenden Schweißbedingungen herangezogen werden. Erst nach diesem mindestens einem Vorversuch wird die Schweißverbindung zwischen je zwei, eigentlich miteinander zu verschweißenden optischen Fasern hergestellt und zwar mit den korrigierten, das heißt an die konkret vorliegenden Umwelt-/oder Umgebungsbedingungen angepaßten Schweißparametersatz.

Auf diese Weise ist es also möglich, mindestens einen der für den jeweiligen Schweißvorgang maßgebenden Schweißparameter ( wie zum Beispiel Schweißstromstärke, Schweißzeitdauer, usw.) unter einer Vielzuahl praktischer Gegebenheiten die jeweilig akutelle vorliegenden Schweißbedingungen (wie zum Beispiel Luftdruck, Luftfeuchtigkeit, Lufttemperatur, verwendeter Lichtleitfasertyp, Elektrodenzustand, usw.) in einfacher sowie zuverlässiger Weise anzupassen. Es können also mögliche, eine Qualität der Schweißverbindung bestimmende Größen umfassend mit einbezogen werden. Damit kann wechelndem bzw. unterschiedlichen Schweißverhältnissen Rechnung getragen werden, das heißt die Einstellung von Schweißparametern kann also in einfacher Weise so vorgenommen werden, daß eine möglichst gute, von Umwelt- und/oder Umgebungseinflüssen weitgehend unabhängige Schweißverbindung zwischen je zwei optischen Fasern herstellbar wird. Auf diese Weise läßt sich die Spleißqualität von thermischen SChweißverbindungen zwischen mindestens zwei Lichtleitfasern ganz erheblich verbessern.

## Patentansprüche

1. Verfahren zum Verschweißen mindestens zweier, einander zugeordneter optischer Fasern, wobei zunächst in einem Vorversuch ein Probe-Lichtleitfaserabschnitt (LF) während einer vorgegebenen Prüfzeitdauer einer definierten Zugspannung unterworfen wird sowie an mindestens einer Längsstelle erwärmt wird, so daß an dieser Längsstelle eine Einschürung des Probe-Lichtleitfaserabschnitts (LF) in radialer Richtung hervorgerufen wird, wobei in diesem Vorversuch mindestens ein zu der Einschnürung (Δd) korrespondierendes Meßkriterium erfaßt wird, anhand dessen der gemäß der aktuell vorliegenden Schweißbedingungen für die anschließende Verschweißung der optischen Fasern erforderliche Schweißstrom ermittelt wird, wobei der Lichtleitfaserabschnitt (LF) erwärmt wird, indem ihm eine Abfolge von Schweißstromimpulsen zugeführt wird, wobei zunächst entweder bei konstanter Schweißstromimpulsdauer die Schweißstromstärke oder bei konstanter Schweißstromstärke die Schweißstromimpulsdauer so lange erhöht wird, bis der Beginn der Einschnürung ermittelt wird, und wobei anschließend die Schweißstromstärke bzw. die Schweißstromimpulsdauer derart geregelt wird, daß der Einschnürungsbetrag pro Schweißimpuls annähernd konstant ist.

2. Verfahren nach Anspruch 1,
wobei
als Probe-Lichtleitfaserabschnitt (LF) ein entcoateter, durchgehender Faserabschnitt eines zu verschweißenden Lichtwellenleiters verwendet wird.

3. Verfahren nach Anspruch 1,
wobei
als Probe-Lichtleitfaserabschnitt (LF) ein Faserabschnitt einer eigens vorgesehenen Testfaser verwendet wird.

4. Verfahren nach einem der vorhergehenden Ansprüche,
wobei
der Probe-Lichtleitfaserabschnitt (LF) durch Verschweißung zweier Lichtleitfaserenden (LF1, LF2) gebildet wird.

5. Verfahren nach einem der vorhergehenden Ansprüche,
wobei
von dem jeweiligen Probe-Lichtleitfaserabschnitt (LF) ein optisches Abbild in mindestens einer Projektionsebene (x,z) erzeugt sowie erfaßt wird, und daß die Bildinformation dieses Faserabbilds zur Auswertung bereitgestellt wird.

6. Verfahren nach Anspruch 5,
wobei
aus der Bildinformation des Probe-Lichtleitfaserabschnitts (LF) mindestens ein Meßkriterium für die Einschnürung ermittelt wird.

7. Verfahren nach einem der Ansprüche 5 oder 6,
wobei
als Meßkriterium für die Einschnürung die Helligkeitsveränderung innerhalb mindestens eines Bildausschnitts der Projektionsebene herangezogen wird, von welchem das optische Abbild der Außenkontur (OL1) mindestens einer der beiden Längsseiten des Probe-Lichtleitfaserabschnitts (LF) im Bereich dessen Erwärmungsstelle (EZ) erfaßt wird.

8. Verfahren nach einem der vorhergehenden Ansprüche,
wobei
als Meßkriterium für die Einschnürung die Verringerung des Außendurchmessers (AD) des Probe-Lichtleitfaserabschnitts (LF) an der Erwärmungsstelle (EZ) herangezogen wird.

9. Verfahren nach einem der vorhergehenden Ansprüche,
wobei
der unter Zugspannung (F) stehende Probe-Lichtleitfaserabschnitt (LF) so weit erwärmt wird, bis eine vorgegebene Soll-Einschnürung (Δd) erreicht wird.

10. Verfahren nach Anspruch 9,
wobei
die zu erreichende Soll-Einschnürung (Δd) danach festgelegt wird, daß sie der zum CJ (optimalen Faserviskosität) zugeordnet ist.

11. Verfahren nach einem der Ansprüche 9 oder 10,
wobei
die zu erreichende Soll-Einschnürung (Δd) des Probe-Lichtleitfaserabschnitts (LF) etwa gleich der Hälfte dessen ursprünglichen Außendurchmessers (AD) gewählt wird.

12. Verfahren nach einem der vorhergehenden Ansprüche,
wobei
im Probe-Lichtleitfaserabschnitt (LF) ein Meßlicht (ML) geführt wird, und daß eine etwaige Veränderung dieses Meßlichts (ML) gemessen und als Meßkriterium für die Einschnürung herangezogen wird.

13. Verfahren nach einem der vorhergehenden Ansprüche,
wobei
bei den jeweilig vorliegenden Schweißbedingungen die Pulslängen (PL1 mit PLn) derjenigen Hitzeimpulse (HP1 mit HPn) als Meßkriterium für die Einschnürung ermittelt werden, ab denen eine im wesentlichen konstante Durchmesserreduzierung des Probe-Lichtleitfaserabschnitts (LF) pro abgegebenem Hitzeimpuls einsetzt.

14. Verfahren nach Anspruch 13,
wobei
mit Hilfe der Pulslänge (PL1 mit PLn) mindestens eines Hitzeimpulses der zugehörige Korrekturfaktor zur Optimierung mindestens eines Schweißparameters ermittelt wird.

15. Verfahren nach einem der vorhergehenden Ansprüche,
wobei
nach und/oder während der Durchführung des jeweiligen Erwärmungsvorgangs des Probe-Lichtleitfaserabschnitts (LF) der zeitliche Verlauf (PA) einer etwaig ausgelösten Einschnürung aufgenommen und zur Auswertung bereitgestellt wird.

16. Verfahren nach einem der vorhergehenden Ansprüche,
wobei
als Meßkriterium für die Einschnürung des jeweiligen Schweißvorgangs am Probe-Lichtleitfaserabschnitt (LF) diejenige Zeitdauer (tE2) ermittelt wird, die ausgehend vom ursprünglichen Außendurchmesser (AD) des Probe-Lichtleitfaserabschnitts (LF) zur Erreichung einer vorgebbaren, radialen Querschnittsreduzierung benötigt wird.

17. Verfahren nach einem der vorhergehenden Ansprüche,
wobei
als Meßkriterium für die Einschnürung des jeweiligen Schweißvorgangs am Probe-Lichtleitfaserabschnitt (LF) derjenige Schweißstrom (IS) bestimmt wird, der ausgehend vom ursprünglichen Außendurchmesser (AD) des Probe-Lichtleitfaserabschnitts (LF) zur Erreichung einer vorgebbaren, radialen Querschnittsreduzierung benötigt wird.

18. Vorrichtung (TV) zur Durchführung des Verfahrens nach einem der vorhergehenden Ansprüche, wobei, mindestens eine Zugeinrichtung (HV1, HV2) vorgesehen ist, mit der in mindestens einem Vorversuch mindestens ein Probe-Lichtleitfaserabschnitt (LF) während einer vorgebbaren Prüfzeitdauer einer definierten Zugspannung (F) unterwerfbar ist, daß mindestens eine Heizeinrichtung in Form von Schweißelektroden (EL1, EL2) vorgesehen ist, mit der der unter Zugspannung (F) stehende Probe-Lichtleitfaserabschnitt (LF) an mindestens einer Längsstelle erwärmbar ist, daß ein Bildverarbeitungssystem (VK) vorgesehen ist, welches derart ausgebildet ist, daß von ihm von dem Probe-Lichtleitfaserabschnitt (LF) ein optisches Abbild in mindestens einer Projektionsebene (x,z) erzeugt wird und daß von ihm Helligkeitsänderungen im optischen Abbild erfaßt werden, und daß eine mit dem Bildverarbeitungssystem (VK) gekoppelte Auswerte-/Steuereinrichtung (COM) vorgesehen ist, welche derart ausgebildet ist, daß von ihr aus den erfaßten Helligkeitsänderungen eine sich an der Erwärmungsstelle in radialer Richtung ausbildende Einschnürung (Δd) am Außenumfang des Probe-Lichtleitfaserabschnitts (LF) ermittelt wird und daß von ihr in Abhängigkeit von der ermittelten Einschnürung der Schweißstrom an die jeweils aktuell vorliegenden Schweißbedingungen angepaßt wird.

19. Lichtwellenleiter-Spleißgerät mit einer Vorrichtung nach Anspruch 18.

## Claims

1. Method for welding at least two light waveguides as assigned to each other wherein first in a preliminary trial a test optical fibre section (LF) during a predetermined testing duration is subjected to a defined tensile stress as well is heated at at least one longitudinal location so that at this longitudinal location a constriction of the test optical fibre section (LF) in radial direction is produced wherein in said preliminary trial at least one measuring criterion as corresponding to the constriction (Δd) is acquired by means of which according to the currently present welding conditions for the subsequent welding of the optical fibres the required welding current is acquired wherein the optical fibre section (LF) is heated by applying a sequence of welding current impulses thereto wherein first either with a constant welding current impulse duration the welding current strength or with constant welding current strength the welding current impulse duration is increased until the start of the constriction is acquired and wherein subsequently the welding current strength or the welding current impulse duration, respectively, is regulated such that the constriction amount per welding impulse is nearly constant.

2. Method according to claim 1, wherein a decoated continuous fibre section of an optical waveguide to be welded is employed as test optical fibre section (LF).

3. Method according to claim 1, wherein a fibre section of a separately provided test fibre is employed as test optical fibre section (LF).

4. Method according to one of the preceding claims, wherein the test optical fibre section (LF) is formed by welding two optical fibre ends (LF1, LF2).

5. Method according to one of the preceding claims, wherein an optical image of the respective test optical fibre section (LF) is produced and acquired in at least one projection plane (x, z); and in that the image information of this fibre image is offered for evaluation.

6. Method according to claim 5, wherein at least one measuring criterion for the constriction is determined from the image information of the test optical fibre section (LF).

7. Method according to one of the claims 5 or 6, wherein the variation of light intensity within at least one image portion of the projection plane with which the optical image of the outside contour (OL1) of at least one of the two long sides of the test optical fibre section (LF) is acquired in the region of its heating location (EZ) is utilized as measuring criterion for the constriction.

8. Method according to one of the preceding claims, wherein the reduction of the outside diameter (AD) of the test optical fibre section (LF) at the heating location (EZ) is utilized as measuring criterion for the constriction.

9. Method according to one of the preceding claims, wherein the test optical fibre section (LF) residing under tensile stress (F) is heated until a predetermined target constriction (Δd) is achieved.

10. Method according to claim 9, wherein the target constriction (Δd) to be achieved is defined such that it is allocated to CJ (optimum fibre viscosity).

11. Method according to one of the claims 9 or 10, wherein the target constriction (Δd) of the test optical fibre section (LF) to be achieved is selected approximately equal to half the original outside diameter (AD) thereof.

12. Method according to one of the preceding claims, wherein a measuring light (ML) is conducted in the test optical fibre section (LF); and in that a possible variation of this measuring light (ML) is measured and utilized as measuring criterion for the constriction.

13. Method according to one of the preceding claims, wherein the pulse lengths (PL1 through PLn) of those heat pulses (HP1 through HPn) are identified as measuring criterion for the constriction given the respectively present welding conditions beginning with which a substantially constant reduction in diameter of the test optical fibre section (LF) begins per heat pulse output.

14. Method according to claim 13, wherein the appertaining correction factor for optimising at least one welding parameter is determined with the assistance of the pulse length (PL1 through PLn) of at least one heat pulse.

15. Method according to one of the preceding claims, wherein the time curve (PA) of a possibly triggered constriction is registered and offered for evaluation after and/or during the implementation of the respective heating event of the test optical fibre section (LF).

16. Method according to one of the preceding claims, wherein the time duration (tE2) that is required for achieving a prescribable, radial cross-sectional reduction proceeding from the original outside diameter (AD) of the test optical fibre section (LF) is determined as measuring criterion for the constriction of the respective welding process.

17. Method according to one of the preceding claims, wherein that welding current (IS) that is required for achieving a prescribable, radial cross-sectional reduction proceeding from the original outside diameter (AD) of the test optical fibre section (LF) is determined as measuring criterion for the constriction of the respective welding process at the test optical fibre section (LF).

18. Apparatus (TV) for implementing the method according to one of the preceding claims wherein at least one traction means (HV1, HV2) is provided by which in at least one preliminary trial at least one test optical fibre section (LF) during a prescribable testing duration being subjectable to a defined tensile stress (F), that at least one heating device in form of welding electrodes (EL1, EL2) is provided by which the test optical fibre section (LF) residing under tensile stress (F) can be heated at at least one longitudinal location; that an image processing system (VK) is provided that is formed such that thereof from the test optical fibre section (LF) an optical image in at least one projection plane (x, y) is produced and that therefrom variations of light intensity in the optical image are acquired and that an evaluation/ control means (COM) as coupled to the image processing system (VK) is provided which is formed such that therefrom from the identified modifications of the light intensity a constriction (Δd) as arising at the heating location in radial direction at the outside circumference of the test optical fibre section (LF) is acquired and that therefrom depending on the acquired constriction the welding current is adapted to the respectively currently existing welding conditions.

19. Light waveguide splicing device comprising an apparatus according to claim 18.

## Revendications

1. Procédé de soudage d'au moins deux fibres optiques conjuguées, dans lequel, tout d'abord, au cours d'un essai préliminaire, un échantillon de section de fibre optique (LF) est soumis à une contrainte de traction définie pendant une période d'essai prédéterminée et est également chauffé en au moins une position longitudinale de sorte qu'il se forme, dans cette position longitudinale, une striction de l'échantillon de section de fibre optique (LF) dans la direction radiale, dans lequel, au cours de cet essai préliminaire, on saisit au moins un critère de mesure correspondant à la striction (Δd), sur la base duquel on détermine le courant de soudage nécessaire au soudage ultérieur des fibres optiques dans les conditions de soudage réellement présentes, dans lequel la section de fibre optique (LF) est chauffée en lui appliquant une séquence d'impulsions de courant de soudage, dans lequel, tout d'abord, à durée constante des impulsions du courant de soudage, l'intensité du courant de soudage ou, à intensité constante du courant de soudage, la durée des impulsions du courant de soudage est augmentée assez longtemps pour déterminer le début de la striction, et dans lequel, ensuite, l'intensité du courant de soudage ou la durée des impulsions du courant de soudage est régulée de sorte que le degré de striction par impulsion de soudage soit presque constant

2. Procédé selon la revendication 1, dans lequel on utilise comme échantillon de section de fibre optique (LF) une section de fibre continue non revêtue d'un guide d'ondes optique à souder.

3. Procédé selon la revendication 1, dans lequel on utilise comme échantillon de section de fibre optique (LF) une section de fibre d'une fibre d'essai prévue à cet effet.

4. Procédé selon l'une quelconque des revendications précédentes, dans lequel l'échantillon de section de fibre optique (LF) est formée par soudage de deux extrémités de fibre optique (LF1, LF2).

5. Procédé selon l'une quelconque des revendications précédentes, dans lequel une représentation optique de l'échantillon de section de fibre optique respectif (LF) est produite et saisie dans au moins un plan de projection (x, z) et les informations d'image de cette représentation de fibre sont préparées pour une exploitation.

6. Procédé selon la revendication 5, dans lequel au moins un critère de mesure est déterminé pour la striction à partir des informations d'image de l'échantillon de section de fibre optique (LF).

7. Procédé selon l'une quelconque des revendications 5 ou 6, dans lequel on utilise comme critère de mesure pour la striction la variation de luminosité dans au moins une section d'image du plan de projection, ce qui permet de saisir la représentation optique du contour externe (OL1) d'au moins l'un des deux côtés longitudinaux de l'échantillon de section de fibre optique (LF) dans la zone de sa position de chauffage (EZ).

8. Procédé selon l'une quelconque des revendications précédentes, dans lequel on utilise comme critère de mesure pour la striction la réduction du diamètre externe (AD) de l'échantillon de section de fibre optique (LF) au point de chauffage (EZ).

9. Procédé selon l'une quelconque des revendications précédentes, dans lequel l'échantillon de section de fibre optique (LF) placé sous contrainte de traction (F) est chauffé suffisamment pour que soit atteinte une striation de consigne prédéterminée (Δd)

10. Procédé selon la revendication 9, dans lequel la striction de consigne à atteindre (Δd) est établie selon un critère de sorte qu'elle soit affectée à la viscosité de fibre optimale pour le CJ.

11. Procédé selon l'une quelconque des revendications 9 ou 10, dans lequel la striction de consigne à atteindre (Δd) de l'échantillon de section de fibre optique (LF) est choisie plus ou moins égale à la moitié de son diamètre externe initial (AD).

12. Procédé selon l'une quelconque des revendications précédentes, dans lequel on achemine dans l'échantillon de section de fibre optique (LF) une lumière de mesure (ML), on mesure une variation éventuelle de cette lumière de mesure (MF) et on l'utilise comme critère de mesure pour la striction.

13. Procédé selon l'une quelconque des revendications précédentes, dans lequel, dans les conditions de soudage respectivement présentes, les longueurs (PL1 à PLn) des impulsions thermiques (HP1 à HPn) sont déterminées comme critère de mesure pour la striction, lors desquelles s'établit une réduction de diamètre sensiblement constante de l'échantillon de section de fibre optique (LF) par impulsion thermique délivrée.

14. Procédé selon la revendication 13, dans lequel le facteur de correction associé pour optimiser au moins un paramètre de soudage est déterminé à l'aide de la longueur (PL1 à PLn) d'au moins une impulsion thermique.

15. Procédé selon l'une quelconque des revendications précédentes, dans lequel, après et/ou pondant la réalisation de l'opération de chauffage respective de l'échantillon de section de fibre optique (LF), on enregistre le déroulement dans le temps (PA) d'une striction éventuellement déclenchée et on le prépare pour l'exploitation.

16. Procédé selon l'une quelconque des revendications précédentes, dans lequel on détermine comme critère de mesure pour la striction de l'opération de soudage respective sur l'échantillon de section de fibre optique (LF) la période (tE2) qui est nécessaire, en partant du diamètre exteme initial (AD) de l'échantillon de section de fibre optique (LF), pour atteindre une réduction de section transversale radiale prédéterminable.

17. Procédé selon l'une quelconque des revendications précédentes, dans lequel on détermine comme critère de mesure pour la striction de l'opération de soudage respective sur l'échantillon de section de fibre optique (LF) le courant de soudage (IS) qui est nécessaire, en partant du diamètre externe initial (AD) de l'échantillon de section de fibre optique (LF), pour atteindre une réduction de section transversale radiale prédéterminable.

18. Dispositif (TV) pour réaliser le procédé selon l'une quelconque des revendications précédentes, dans lequel il est prévu au moins un dispositif de traction (HV1, HV2), avec lequel, au cours d'au moins un essai préliminaire, au moins un échantillon de section de fibre optique (LF) peut être soumis, au cours d'une période d'essai prédéterminable, à une contrainte de traction définie (F), il est prévu au moins un dispositif de chauffage sous la forme d'électrodes de soudage (EL1, EL2), avec lesquelles l'échantillon de section de fibre optique (LF) qui se trouve sous contrainte de traction (F) peut être chauffé en au moins une position longitudinale, il est prévu un système de traitement d'image (VK), qui est conformé de manière qu'il produise dans l'échantillon de section de fibre optique (LF) une représentation optique dans au moins un plan de projection (x, z) et qu'il saisisse des variations de luminosité dans la représentation optique, et il est prévu un dispositif d'exploitation/commande (COM) couplé au système de traitement d'image (VK), qui est conformé de sorte qu'il détermine, à partir des variations de luminosité détectées, une striction (Δd) se formant dans la position de chauffage dans la direction radiale sur la périphérie externe de l'échantillon de section de fibre optique (LF) et qu'il adapte le courant de soudage, en fonction de la striction déterminée, aux conditions de soudage respectives réellement présentes.

19. Appareil d'épissage de guides d'ondes optiques avec un dispositif selon la revendication 18.
